# EUROPEAN PATENT APPLICATION

(11) **EP 3 554 048 A1**
(43) Date of publication of application: **16.10.2019**
(21) Application number: 17878618.2
(22) Date of filing: 26.10.2017
(51) Int. Cl.: H04L 29/08

(54) **INFORMATION PROCESSING DEVICE AND RELAY DEVICE**

(30) Priority: 09.12.2016 JP 2016239004
(71) Applicant: Sony Corporation, Tokyo 108-0075 (JP)
(72) Inventor: NAKATSURU, Tsutomu, Tokyo 108-0075 (JP); KURITA, Taro, Tokyo 108-0075 (JP); SHIMOJI, Katsuya, Tokyo 108-0075 (JP); YONEDA, Yoshihiro, Tokyo 108-0075 (JP)
(74) Representative: Witte, Weller & Partner Patentanwälte mbB
(86) International application number: PCT/JP2017/038600
(87) International publication number: WO 2018/105260

(57) **Abstract**

There is provided an information processing device that communicates with an external device which is a communication target through a relay device, the information processing device including: a processing unit that causes a command or information for generating the command and assumed response information to the relay device, the assumed response information indicating a response assumed to be transmitted from the external device in accordance with the command.

## Description

### Technical Field

The present disclosure relates to an information processing device and a relay device.

### Background Art

Techniques for more efficiently controlling a device connected via a network have been developed. Examples of such techniques include a technique disclosed in the following Patent Literature 1.

### Citation List

### Patent Literature

Patent Literature 1: JP 2004-186883A

### Disclosure of Invention

### Technical Problem

For example, in a case where the technique disclosed in Patent Literature 1 is used, a plurality of commands is collectively transmitted through one communication. Accordingly, in a case where the technique disclosed in Patent Literature 1 is used, the number of communications between devices connected via a network can be reduced, and thus it is possible to more efficiently control the devices connected through the network.

However, for example, in the technique disclosed in Patent Literature 1, a plurality of transmitted commands is simply transmitted collectively through one communication, and for example, it is difficult to reduce the number of communications related to an encrypted command. Accordingly, for example, even when the technique disclosed in Patent Literature 1 is used, the number of communications between devices cannot be necessarily reduced.

In the present disclosure, a new and improved information processing device and a relay device which are capable of reducing the number of communications between devices are proposed.

### Solution to Problem

According to the present disclosure, there is provided an information processing device that communicates with an external device which is a communication target through a relay device, the information processing device including: a processing unit that causes a command or information for generating the command and assumed response information to the relay device, the assumed response information indicating a response assumed to be transmitted from the external device in accordance with the command.

In addition, according to the present disclosure, there is provided an information processing device communicating with an external device which is a communication target through a relay device, the information processing device including: a processing unit that causes, in a case where response information transmitted from the external device in accordance with a first command to be transmitted is not used to generate a second command to be transmitted after the first command, both the first command and the second command to be transmitted to the relay device.

In addition, according to the present disclosure, there is provided an information processing device that communicates with an external device which is a communication target through a relay device, the information processing device including: a processing unit that causes a parameter for which a term of validity is set to be transmitted on a regular or non-regular basis, the parameter being used for authentication of the external device, determines, in a case where data is received from the relay device, whether or not the parameter satisfying the term of validity is included in the received data, and determines that authentication has been successful in a case where it is determined that the parameter satisfying the term of validity is included in the received data.

In addition, according to the present disclosure, there is provided a relay device including: a processing unit that causes, in a case where a command transmitted from a first information processing device or information for generating the command is received, the command to be transmitted to a second information processing device. In a case where assumed response information indicating a response assumed to be transmitted from the second information processing device in accordance with the command transmitted from the first information processing device is further received, the processing unit determines whether or not a process corresponding to the command has been performed normally in the second information processing device on the basis of the assumed response information and the response information indicating the response, corresponding to the command, which is transmitted from the second information processing device.

In addition, according to the present disclosure, there is provided a relay device including: a processing unit that causes a command for authenticating a second information processing device to be transmitted to the second information processing device on the basis of a parameter used for authentication of the second information processing device which is transmitted from a first information processing device on a regular or non-regular basis. The processing unit causes a command for performing the authentication based on a latest parameter among the parameters received from the first information processing device to be transmitted to the second information processing device in a case where the second information processing device is captured, and causes response information to be transmitted from the second information processing device in accordance with the command for performing the authentication to be transmitted to the first information processing device.

### Advantageous Effects of Invention

According to the present disclosure, it is possible to reduce the number of communications between devices.

Note that the effects described above are not necessarily limitative. With or in the place of the above effects, there may be achieved any one of the effects described in this specification or other effects that may be grasped from this specification.

### Brief Description of Drawings

FIG. 1 is an explanatory diagram illustrating an example of a configuration of an information processing system according to the present embodiment.
FIG. 2 is a block diagram illustrating an example of a configuration of an information processing device (a first information processing device) according to the present embodiment.
FIG. 3 is an explanatory diagram illustrating an example of a hardware configuration of an information processing device (a first information processing device) according to the present embodiment.
FIG. 4 is a block diagram illustrating an example of a configuration of a reader/writer (relay device) according to the present embodiment.
FIG. 5 is an explanatory diagram illustrating an example of a hardware configuration of a reader/writer (relay device) according to the present embodiment.
FIG. 6 is a block diagram illustrating an example of a configuration of an information processing terminal (a second information processing device) according to the present embodiment.
FIG. 7 is an explanatory diagram illustrating an example of a hardware configuration of an information processing terminal (a second information processing device) according to the present embodiment.
FIG. 8 is an explanatory diagram illustrating an example of a configuration of an IC chip and an antenna illustrated in FIG. 7.
FIG. 9 is an explanatory diagram illustrating an example of the existing communication before an information processing method according to the present embodiment is applied.
FIG. 10 is an explanatory diagram illustrating an example of a process according to an information processing method according to a first embodiment.
FIG. 11 is an explanatory diagram illustrating an example of a process according to an information processing method according to a second embodiment.
FIG. 12 is an explanatory diagram illustrating an example of a process according to an information processing method according to a third embodiment.
FIG. 13 is an explanatory diagram illustrating an example of a process according to an information processing method according to a fourth embodiment.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Further, the following description will proceed in the order described below.
1. Information processing system according to the present embodiment and information processing method according to the present embodiment
2. Program according to the present embodiment

### (Information processing system according to the present embodiment and information processing method according to the present embodiment)

Hereinafter, an example of an information processing system according to the present embodiment will be described first, and then an information processing method according to the present embodiment will be described using a case applied to the information processing system according to the present embodiment as an example.

### [1] Information processing system according to the present embodiment

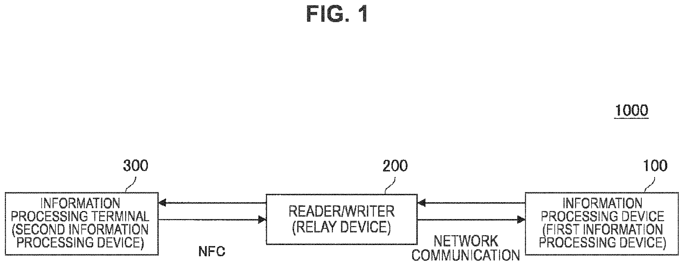

FIG. 1 is an explanatory diagram illustrating an example of a configuration of an information processing system 1000 according to the present embodiment. The information processing system 1000 includes, for example, an information processing device 100 (a first information processing device), a reader/writer 200 (relay device), and an information processing terminal 300 (a second information processing device).

The information processing device 100 and the reader/writer 200 are connected, for example, via a network in a wireless or wired manner, and perform communication by communication via a network (hereinafter referred to as "network communication"). Examples of the network according to the present embodiment include a wired network such as a local area network (LAN) or a wide area network (WAN), a wireless network such as a wireless local area network (WLAN), and the Internet using a communication protocol such as Transmission Control Protocol/Internet Protocol (TCP/IP).

Further, in the information processing system according to the present embodiment, the information processing device 100, the information processing device 100, and the reader/writer 200 can also communicate directly with each other without going through the network.

Further, the reader/writer 200 and the information processing terminal 300 perform communication via, for example, near field communication (NFC) of Type-A, Type-B, Type-F, or the like.

Further, in the information processing system according to the present embodiment, for example, the reader/writer 200 and the information processing terminal 300 may perform communication in accordance with "wireless communication of an arbitrary communication scheme such as wireless communication using IEEE 802.15.1 such as Bluetooth low energy (BLE), wireless communication using IEEE 802.11, or infrared communication" or "wired communication using communication via a communication interface or the like based on a Universal Serial Bus (USB) or ISO 7816 standard."

The information processing device 100 and the information processing terminal 300 perform communication via the reader/writer 200. In other words, in the information processing system 1000, the reader/writer 200 serves as a relay device that relays communication between the information processing terminal 300 and the information processing device 100.

Hereinafter, as illustrated in FIG. 1, a case where the information processing device 100 and the reader/writer 200 communicate with each other through network communication and the reader/writer 200 and the information processing terminal 300 communicate with each other through NFC will be described as an example. Note that an information processing method according to the present embodiment to be described later can also be applied in a case where the various types of communication described above are performed in the information processing system according to the present embodiment.

### [1-1] Information processing device 100 (First information processing device)

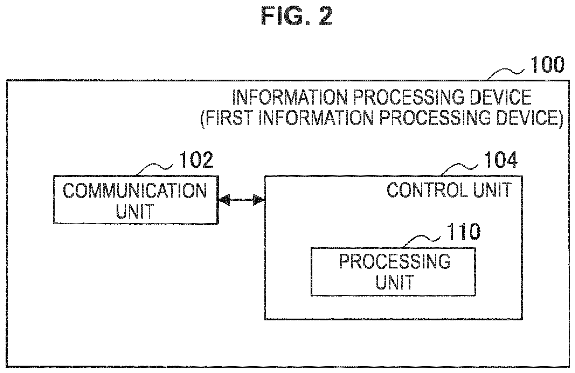

FIG. 2 is a block diagram illustrating an example of a configuration of the information processing device 100 (first information processing device) according to the present embodiment. The information processing device 100 includes, for example, a communication unit 102 and a control unit 104.

Further, the information processing device 100 may include, for example, a read only memory (ROM) (not illustrated), a random access memory (RAM) (not illustrated), a storage unit (not illustrated), a manipulating unit (not illustrated) which can be manipulated by a user of the information processing device 100, a display unit (not illustrated) that displays various screens on a display screen, and the like. For example, the respective components of the information processing device 100 are connected with one another via a bus serving as a data transmission path.

The ROM (not illustrated) stores a program and control data such as calculation parameters which are used by the control unit 104. The RAM (not illustrated) temporarily stores a program executed by the control unit 104 and the like.

The storage unit (not illustrated) is a storage means included in the information processing device 100 and stores, for example, various types of data such as data related to the information processing method according to the present embodiment applied to the information processing device 100 and various kinds of applications. Here, examples of the storage unit (not illustrated) include a magnetic recording medium such as a hard disk, a non-volatile memory such as a flash memory, and the like. In addition, the storage unit (not illustrated) may be removable from the information processing device 100.

A manipulation input device illustrated in a hardware configuration example of the information processing device 100 to be described later can be used as the manipulating unit (not illustrated). Further, a display device illustrated in a hardware configuration example of the information processing device 100 to be described later can be used as the display unit (not illustrated).

### [Example of hardware configuration of information processing device 100]

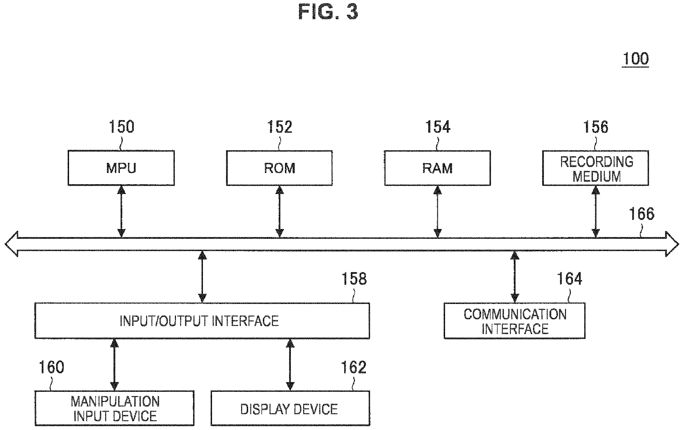

FIG. 3 is an explanatory diagram illustrating an example of a hardware configuration of the information processing device 100 (the first information processing device) according to the present embodiment. The information processing device 100 includes, for example, an MPU 150, a ROM 152, a RAM 154, a recording medium 156, an input/output interface 158, a manipulation input device 160, a display device 162, and a communication interface 164. Further, for example, the respective components of the information processing device 100 are connected with one another via a bus 166 serving as a data transmission path. Further, the information processing device 100 is driven by, for example, electric power supplied from an internal power source such as a battery included in the information processing device 100, electric power supplied from a connected external power source, or the like.

The MPU 150 is constituted by one or more processors constituted by a micro processing unit (MPU) or the like, various kinds of processing circuits, or the like, and functions as the control unit 104 that controls the information processing device 100 in general. Further, in the information processing device 100, the MPU 150 also functions as, for example, a processing unit 110 to be described later. Note that the processing unit 110 may be constituted by a dedicated (or general-purpose) circuit (for example, a processor separate from the MPU 150, or the like).

The ROM 152 stores a program, control data such as calculation parameters, and the like which are used by the MPU 150. The RAM 154 temporarily stores, for example, a program or the like executed by the MPU 150.

The recording medium 156 functions as a storage unit (not illustrated), and stores various data, such as data or various applications regarding to the information processing method according to the present embodiment applied to the information processing device 100. The recording medium 156 stores, for example, various types of data such as various kinds of applications. Here, examples of the recording medium 156 include a magnetic recording medium such as a hard disk and a non-volatile memory such as a flash memory. Further, the recording medium 156 may be removable from the information processing device 100.

The input/output interface 158 connects, for example, the manipulation input device 160 or the display device 162. The manipulation input device 160 functions as a manipulating unit (not illustrated), and the display device 162 functions as a display unit (not illustrated). Here, examples of the input/output interface 158 include a Universal Serial Bus (USB) terminal, a digital visual interface (DVI) terminal, a high-definition multimedia interface (HDMI) (registered trademark) terminal, and various kinds of processing circuits.

Further, for example, the manipulation input device 160 is installed on the information processing device 100 and is connected with the input/output interface 158 in the information processing device 100. For example, a button, a direction key, a rotary type selector such as a jog dial, or a combination thereof can be used as the manipulation input device 160.

Further, for example, the display device 162 is installed on the information processing device 100 and is connected with the input/output interface 158 in the information processing device 100. For example, a liquid crystal display, an organic EL display (also referred to as an organic electro-luminescence display or an organic light emitting diode display) or the like can be used as the display device 162.

Further, it will be appreciated that the input/output interface 158 can be connected to an external device such as an external manipulation input device (for example, a keyboard, a mouse, or the like) of the information processing device 100 or an external display device. Further, the display device 162 may be a device on which display and a user manipulation can be performed such as a touch screen.

The communication interface 164 is a communication device for performing communication of one communication scheme supported by the information processing device 100, and functions as a communication unit 102 for performing wireless or wired communication with an external device such as the reader/writer 200 via a network (or directly). Here, for example, a communication antenna and a radio frequency (RF) circuit (wireless communication), an IEEE 802.15.1 port and a transceiving circuit (wireless communication), an IEEE 802.11 port and a transceiving circuit (wireless communication), a LAN terminal and a transceiving circuit (wired communication), or the like can be used as the communication interface 164. Further, the communication interface 164 may be an arbitrary configuration corresponding to the network according to the present embodiment.

Further, the information processing device 100 performs the process according to the information processing method in the information processing device 100 according to the present embodiment to be described later, for example, with the configuration illustrated in FIG. 3. Further, the hardware configuration of the information processing device 100 according to the present embodiment is not limited to the configuration illustrated in FIG. 3.

For example, in a case in which communication with an external device or the like is performed via a connected external communication device, the information processing device 100 may not include the communication interface 164. Further, the communication interface 164 may have a configuration capable of performing communication with one or more external devices or the like in accordance with a plurality of communication schemes.

Further, the information processing device 100 may have a configuration in which, for example, the recording medium 156, the manipulation input device 160, and the display device 162 are not included.

Further, for example, the information processing device 100 can have a configuration according to an application example of the information processing device 100 to be described later.

Further, for example, some or all of the configuration illustrated in FIG. 3 (or a configuration in accordance with a modified example) may be realized by one or two or more integrated circuits (ICs).

An example of a configuration of the information processing device 100 will be described with reference back to FIG. 2. The communication unit 102 is a communication means included in the information processing device 100 and performs wireless or wired communication with an external device such as the reader/writer 200 via a network (or directly). In addition, the communication of the communication unit 102 is controlled by, for example, the control unit 104.

Here, examples of the communication unit 102 include a communication antenna, an RF circuit, a LAN terminal, a transceiving circuit, and the like, but a configuration of the communication unit 102 is not limited thereto. For example, the communication unit 102 can adopt a configuration corresponding to any standard in which the communication unit can communicate with a USB terminal, a transceiving circuit, and the like or any configuration in which the communication unit can communicate with an external device via a network. In addition, the communication unit 102 may be configured to be capable of communicating with one or two or more external devices in accordance with a plurality of communication schemes.

The control unit 104 is constituted by, for example, an MPU or the like and plays a role of controlling the information processing device 100 in general. Further, the control unit 104 includes, for example, the processing unit 110 and plays a leading role in performing the process according to the information processing method according to the present embodiment in the information processing device 100 to be described later.

The processing unit 110 plays a leading role in processing the process according to the information processing method according to the present embodiment in the information processing device 100. An example of the process according to the information processing method according to the present embodiment in the information processing device 100 will be described later.

Further, the configuration of the information processing device (the first information processing device) according to the present embodiment is not limited to the configuration illustrated in FIG. 2.

For example, the information processing device according to the present embodiment may include the processing unit 110 illustrated in FIG. 2 separately from the control unit 104 (which is realized by, for example, another processing circuit).

Further, the configuration of the information processing device according to the present embodiment is not limited to the configuration illustrated in FIG. 2, and it is possible to employ a configuration corresponding to a way of separating the process according to the information processing method according to the present embodiment in the information processing device 100 to be described later.

Further, for example, in a case in which communication with an external device is performed via an external communication device having a function and configuration similar to those of the communication unit 102, the information processing device according to the present embodiment may not include the communication unit 102.

### [1-2] Reader/writer 200 (relay device)

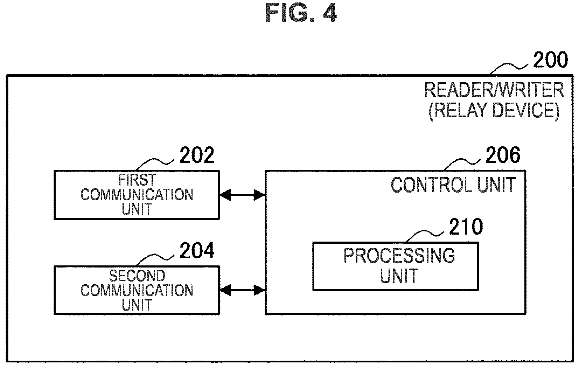

FIG. 4 is a block diagram illustrating an example of a configuration of the reader/writer 200 (relay device) according to the present embodiment.

The reader/writer 200 includes, for example, a first communication unit 202, a second communication unit 204, and a control unit 206.

Further, the reader/writer 200 may include, for example, a ROM (not illustrated), a RAM (not illustrated), a storage unit (not illustrated), a manipulating unit (not illustrated) which can be manipulated by a user, a display unit (not illustrated) that displays various screens on a display screen, and the like. For example, the respective components of the reader/writer 200 are connected with one another via a bus serving as a data transmission path.

The ROM (not illustrated) stores a program and control data such as calculation parameters which are used by the control unit 206. The RAM (not illustrated) temporarily stores a program executed by the control unit 206 and the like.

The storage unit (not illustrated) is a storage means included in the reader/writer 200 and stores, for example, various types of data such as data related to the information processing method according to the present embodiment applied to the reader/writer 200 and various kinds of applications. Here, examples of the storage unit (not illustrated) include a magnetic recording medium such as a hard disk, a non-volatile memory such as a flash memory, and the like. In addition, the storage unit (not illustrated) may be removable from the reader/writer 200.

The above-described manipulation input device can be used as the manipulating unit (not illustrated). In addition, the above-described display device can be used as the display unit (not illustrated).

### [Hardware configuration example of reader/writer 200]

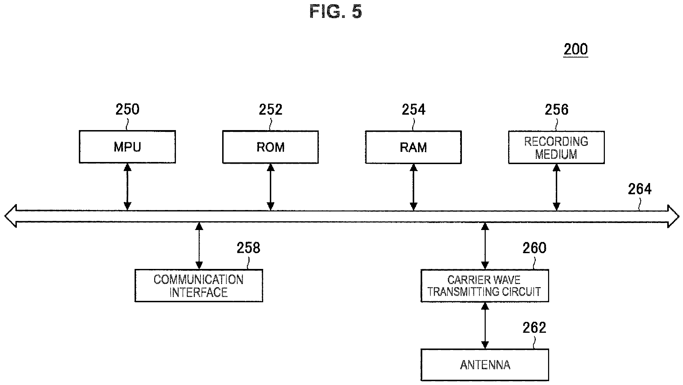

FIG. 5 is an explanatory diagram illustrating an example of a hardware configuration of the reader/writer 200 (relay device) according to the present embodiment.

The reader/writer 200 includes, for example, an MPU 250, a ROM 252, a RAM 254, a recording medium 256, a communication interface 258, a carrier wave transmitting circuit 260, and an antenna 262. Further, for example, the respective components of the reader/writer 200 are connected with one another via a bus 264 serving as a data transmission path. Further, the reader/writer 200 is driven by, for example, electric power supplied from an internal power source such as a battery included in the reader/writer 200, electric power supplied from a connected external power source, or the like.

The MPU 250 is constituted by one or more processors constituted by an MPU or the like, various kinds of processing circuits, or the like, and functions as the control unit 206 that controls the reader/writer 200 in general. Further, in the reader/writer 200, the MPU 250 also functions as, for example, a processing unit 210 to be described later.

The ROM 252 stores a program, control data such as calculation parameters, and the like which are used by the MPU 250. The RAM 254 temporarily stores, for example, a program or the like executed by the MPU 250.

The recording medium 256 functions as a storage unit (not illustrated), and stores various data, such as data or various applications regarding to the information processing method according to the present embodiment applied to the reader/writer 200. The recording medium 256 stores, for example, various types of data such as various kinds of applications. Here, examples of the recording medium 256 include a magnetic recording medium such as a hard disk and a non-volatile memory such as a flash memory. Further, the recording medium 256 may be removable from the reader/writer 200.

The communication interface 258 is a communication device which performs communication of one communication scheme supported by the reader/writer 200 and functions as a first communication unit 202 that performs communication with an external device such as the information processing device 100 in a wireless or wired manner via a network (or directly). Here, for example, a communication antenna and an RF circuit (wireless communication), an IEEE 802.15.1 port and a transceiving circuit (wireless communication), an IEEE 802.11 port and a transceiving circuit (wireless communication), a LAN terminal and a transceiving circuit (wired communication), or the like can be used as the communication interface 258. Further, the communication interface 258 may be an arbitrary configuration corresponding to the network according to the present embodiment.

The carrier wave transmitting circuit 260 and the antenna 262 are a communication device that performs communication of other communication schemes supported in the reader/writer 200, and function as a second communication unit 204 that performs communication with an external device such as the information processing terminal 300 in a wireless or wired manner.

The antenna 262 is constituted by, for example, a resonance circuit including a coil having a predetermined inductance serving as a transceiving antenna and a capacitor having a predetermined capacitance and a demodulating circuit. Further, the antenna 262 receives carrier waves of a predetermined frequency such as, for example, 13.56 MHz, and demodulates data or the like transmitted through the load modulation or the like from an external device such as the information processing terminal 300. Further, for example, in a case in which the carrier wave transmitting circuit 260 includes a demodulating circuit, the antenna 262 may be constituted by a resonance circuit.

The carrier wave transmitting circuit 260 includes, for example, a modulating circuit that performs modulation such as amplitude shift keying (ASK) and an amplifying circuit that amplifies an output of the modulating circuit, and causes carrier waves carrying the carrier wave signal from the transceiving antenna of the antenna 262 to be transmitted. Further, the carrier wave transmitting circuit 260 may include a demodulating circuit that demodulates a signal received by the antenna 262, for example. For example, the demodulating circuit performs envelope detection of an amplitude change in a voltage between the modulating circuit (or the amplifying circuit) and the resonance circuit of the antenna 262, binarizes the detected signal, and demodulates the signal received by the antenna 262. Further, the demodulating circuit can demodulate the signal received by the antenna 262, for example, by using a phase change in the voltage between the modulating circuit (or the amplifying circuit) and the resonance circuit of the antenna 262.

Since the carrier wave transmitting circuit 260 is installed, the reader/writer 200 has an initiator function in NFC and undertakes a so-called reader/writer. Here, signals such as, for example, a polling signal and a signal indicating various commands to be described can be used as the carrier wave signal transmitted from the antenna 262 by the carrier wave transmitting circuit 260. Further, for example, the carrier wave transmitting circuit 260 controls the transmission of the carrier wave by the MPU 250.

The reader/writer 200 performs the process according to the information processing method according to the present embodiment in the reader/writer 200 to be described later, for example, with the configuration illustrated in FIG. 5. Note that a hardware configuration of the reader/writer 200 according to the present embodiment is not limited to the configuration illustrated in FIG. 5.

For example, the reader/writer 200 may not include the communication interface 258 in a case in which communication with an external device is performed via an external communication device having a function similar to that of the communication interface 258.

Further, the reader/writer 200 may not include the carrier wave transmitting circuit 260 and the antenna 262 in a case in which communication with an external device is performed via an external communication device having functions similar to those of the carrier wave transmitting circuit 260 and the antenna 262.

Further, the reader/writer 200 may not include the carrier wave transmitting circuit 260 and the antenna 262 in a case in which communication with an external device is performed in accordance with a communication scheme other than NFC such as wireless communication using IEEE 802.15.1. In the case of the above example, the reader/writer 200 performs communication with an external device through a communication device that supports a communication scheme other than NFC or an external communication device that supports a communication scheme other than NFC.

Further, the reader/writer 200 may have a configuration in which, for example, the recording medium 256 is not included.

Further, for example, the reader/writer 200 can have a configuration according to an application example of the reader/writer 200 to be described later.

Further, for example, the configuration illustrated in FIG. 5 (or a configuration in accordance with a modified example) may be realized by one or two or more integrated circuits (ICs).

An example of a configuration of the reader/writer 200 will be described with reference back to FIG. 4.

The first communication unit 202 communicates with an external device in accordance with communication of one communication scheme. For example, the communication of the one communication scheme in the first communication unit 202 is controlled by the control unit 206 (more specifically, for example, the processing unit 110).

Here, for example, a communication antenna and an RF circuit (wireless communication), an IEEE 802.15.1 port and a transceiving circuit (wireless communication), an IEEE 802.11 port and a transceiving circuit (wireless communication), a LAN terminal and a transceiving circuit (wired communication), or the like can be used as the first communication unit 202.

The second communication unit 204 communicates with an external device in accordance with communication of other communication schemes. For example, the communication of the other communication schemes in the second communication unit 204 is controlled by the control unit 206 (more specifically, for example, the processing unit 110).

Here, for example, a communication device supports NFC such as the carrier wave transmitting circuit 260 and the antenna 262 illustrated in FIG. 5 can be used as the second communication unit 204. Note that, as described above, the second communication unit 204 may be a communication device that supports a communication scheme other than NFC such as, for example, wireless communication using IEEE 802.15.1.

The control unit 206 is constituted by, for example, an MPU or the like and plays a role of controlling the reader/writer 200 in general. Further, the control unit 206 includes, for example, the processing unit 110 and plays a leading role in performing the process according to the information processing method according to the present embodiment in the reader/writer 200 to be described later.

The processing unit 210 plays a leading role in processing the process according to the information processing method in the reader/writer 200. An example of the process according to the information processing method according to the present embodiment in the reader/writer 200 will be described later.

Further, the configuration of the reader/writer 200 (relay device) according to the present embodiment is not limited to the configuration illustrated in FIG. 4.

For example, the reader/writer according to the present embodiment may include the processing unit 210 illustrated in FIG. 4 separately from the control unit 206 (which is realized by, for example, another processing circuit).

Further, the configuration of the reader/writer according to the present embodiment is not limited to the configuration illustrated in FIG. 4, and it is possible to employ a configuration corresponding to a way of separating the process according to the information processing method according to the present embodiment in the reader/writer 200 to be described later.

Further, for example, in a case in which communication with an external device is performed via an external communication device having a function and configuration similar to those of the first communication unit 202, the reader/writer according to the present embodiment may not include the first communication unit 202.

Further, for example, in a case in which communication with an external device is performed via an external communication device having a function and configuration similar to those of the second communication unit 204, the reader/writer according to the present embodiment may not include the second communication unit 204.

### [1-3] Information processing terminal 300 (second information processing device)

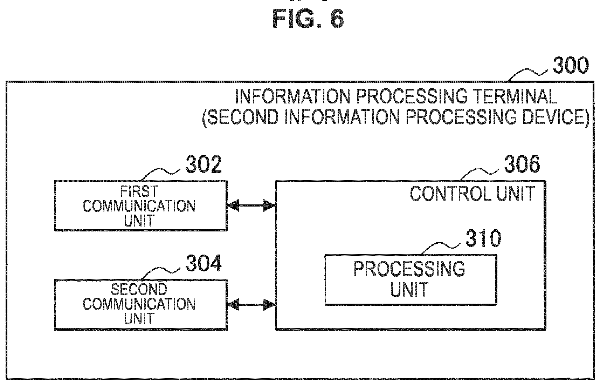

FIG. 6 is a block diagram illustrating an example of a configuration of the information processing terminal 300 (second information processing device) according to the present embodiment.

The information processing terminal 300 includes, for example, a first communication unit 302, a second communication unit 304, and a control unit 306.

Further, the information processing terminal 300 may include, for example, a ROM (not illustrated), a RAM (not illustrated), a manipulating unit (not illustrated) which can be manipulated by a user, a display unit (not illustrated) that displays various screens on a display screen, and the like. For example, the respective components of the information processing terminal 300 are connected with one another via a bus serving as a data transmission path.

The ROM (not illustrated) stores a program and control data such as calculation parameters which are used by the control unit 306. The RAM (not illustrated) temporarily stores a program executed by the control unit 306 and the like.

A manipulation input device illustrated in a hardware configuration example of the information processing terminal 300 to be described later can be used as the manipulating unit (not illustrated). Further, a display device illustrated in a hardware configuration example of the information processing terminal 300 to be described later can be used as the display unit (not illustrated).

### [Example of hardware configuration of information processing terminal 300]

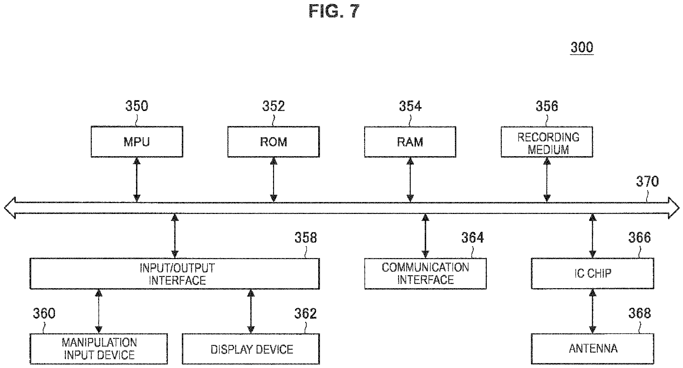

FIG. 7 is an explanatory diagram illustrating an example of a hardware configuration of the information processing terminal 300 (second information processing device) according to the present embodiment. FIG. 7 illustrates an example of a hardware configuration of the information processing terminal 300 in a case in which communication with the reader/writer 200 is performed in accordance with NFC.

The information processing terminal 300 includes, for example, an MPU 350, a ROM 352, a RAM 354, a recording medium 356, an input/output interface 358, a manipulation input device 360, a display device 362, a communication interface 364, an IC chip 366, and an antenna 368. Further, for example, the respective components of the information processing terminal 300 are connected with one another via a bus 370 serving as a data transmission path. Further, the information processing terminal 300 is driven by, for example, electric power supplied from an internal power source such as a battery included in the information processing terminal 300, electric power supplied from a connected external power source, or the like.

The MPU 350 is constituted by one or more processors constituted by a MPU or the like, various kinds of processing circuits, or the like, and functions as the control unit 306 that controls the information processing terminal 300 in general. Further, in the information processing terminal 300, the MPU 350 also functions as, for example, a processing unit 310 to be described later.

The ROM 352 stores a program, control data such as calculation parameters, and the like which are used by the MPU 350. The RAM 354 temporarily stores, for example, a program executed by the MPU 350.

The recording medium 356 functions as a storage unit (not illustrated) and stores various types of data such as, for example, various kinds of applications. Here, examples of the recording medium 356 include a magnetic recording medium such as a hard disk and a non-volatile memory such as a flash memory. Further, the recording medium 356 may be detachable from the information processing terminal 300.

The input/output interface 358 connects, for example, the manipulation input device 360 or the display device 362. The manipulation input device 360 functions as a manipulating unit (not illustrated), and the display device 362 functions as a display unit (not illustrated). Here, examples of the input/output interface 358 include a USB terminal, a DVI terminal, an HDMI (registered trademark) terminal, and various kinds of processing circuits.

Further, for example, the manipulation input device 360 is installed on the information processing terminal 300 and is connected with the input/output interface 358 in the information processing terminal 300. For example, a button, a direction key, a rotary type selector such as a jog dial, or a combination thereof can be used as the manipulation input device 360.

Further, for example, the display device 362 is installed on the information processing terminal 300 and is connected with the input/output interface 358 in the information processing terminal 300. For example, a liquid crystal display, an organic EL display, or the like can be used as the display device 362.

Further, it will be appreciated that the input/output interface 358 can be connected to an external device such as an external manipulation input device (for example, a keyboard or a mouse) or an external display device serving as an external device of the information processing terminal 300. Further, for example, the display device 362 may be a device on which display and a user manipulation can be performed such as a touch screen.

The communication interface 364 is a communication device for performing communication of one communication scheme supported by the information processing terminal 300 and functions as the first communication unit 302. Here, for example, a communication antenna and a radio frequency (RF) circuit (wireless communication), an IEEE 802.15.1 port and a transceiving circuit (wireless communication), an IEEE 802.11 port and a transceiving circuit (wireless communication), a LAN terminal and a transceiving circuit (wired communication), or the like can be used as the communication interface 364.

The IC chip 366 and the antenna 368 are communication devices that perform communication of other communication schemes supported by the information processing terminal 300 and function as the second communication unit 304. For example, the IC chip 366 and the antenna 368 perform NFC communication with an external device having a reader/writer function such as the reader/writer 200 through carrier waves of a predetermined frequency such as 13.56 MHz.

The antenna 368 plays a role of receiving carrier waves and transmitting a response signal. Further, the IC chip 366 demodulates and processes a carrier wave signal transmitted from an external device such as the reader/writer 200 on the basis of received carrier waves, and causes the response signal to be transmitted through load modulation.

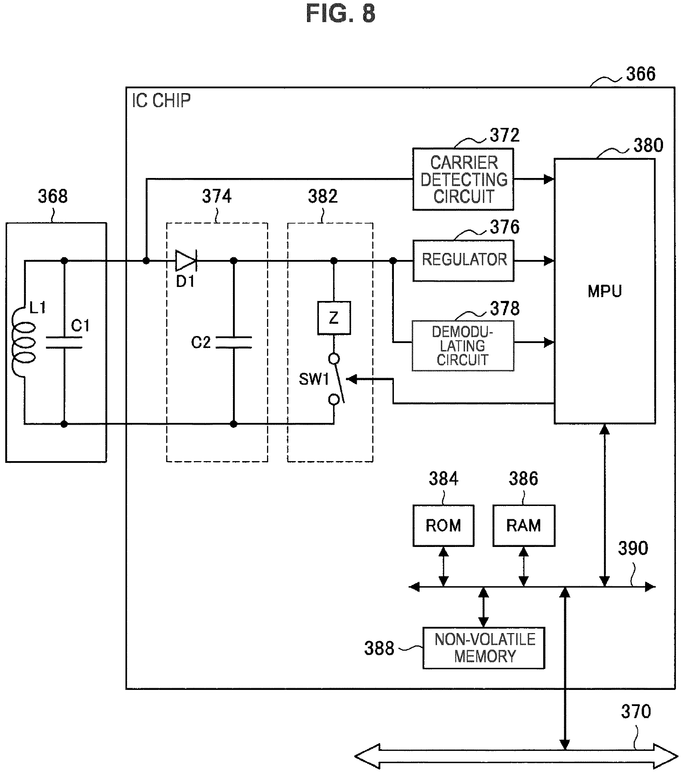

FIG. 8 is an explanatory diagram illustrating an example of a configuration of the IC chip 366 and the antenna 368 illustrated in FIG. 7. Further, for example, the information processing terminal 300 may not have a configuration of the IC chip 366 illustrated in FIG. 8 in the form of an IC chip.

The antenna 368 is constituted by a resonance circuit including, for example, a coil (inductor) L1 having a predetermined inductance and a capacitor C1 having a predetermined capacitance, and generates an inductive voltage through electromagnetic induction in response to the reception of the carrier wave. Further, the antenna 368 outputs a reception voltage obtained by resonating the inductive voltage at a predetermined resonance frequency. Here, the resonance frequency of the antenna 368 is set in accordance with a frequency of the carrier wave such as, for example, 13.56 MHz. The antenna 368 receives the carrier wave through the above configuration and transmits a response signal through load modulation performed in a load modulation circuit 382 of the IC chip 366.

The IC chip 366 includes, for example, a carrier detecting circuit 372, a detecting circuit 374, a regulator 376, a demodulating circuit 378, an MPU 380, and a load modulation circuit 382. Further, although not illustrated in FIG. 8, the IC chip 366 may further include, for example, a protection circuit (not illustrated) for preventing an overvoltage or an overcurrent from being applied to the MPU 380. Here, for example, a clamp circuit or the like constituted by a diode or the like can be used as the protection circuit (not illustrated).

Further, the IC chip 366 includes, for example, a ROM 384, a RAM 386, and a non-volatile memory 388. For example, the MPU 380, the ROM 384, the RAM 386, and the non-volatile memory 388 are connected via a bus 390 as a data transmission path. Further, the bus 390 is connected to the bus 370.

The ROM 384 stores a program and control data such as calculation parameters which are used by the MPU 380. The RAM 386 temporarily stores a program executed by the MPU 380, a calculation result, an execution state, or the like.

The non-volatile memory 388 stores various types of data such as encryption key information used for mutual authentication in communication of other communication schemes such as, for example, NFC, electronic values (money or data of value equal to money), and various kinds of applications. Here, examples of the non-volatile memory 388 include an electrically erasable and programmable read only memory (EEPROM), a flash memory, and the like. The non-volatile memory 388, for example, has tamper resistance and corresponds to an example of a secure recording medium.

The carrier detecting circuit 372 generates, for example, a rectangular detection signal on the basis of a reception voltage transferred from the antenna 368, and transmits the detection signal to the MPU 380. Further, for example, the MPU 380 uses the transferred detection signal as a process clock for data processing. Here, since the detection signal is a signal based on the reception voltage transferred from the antenna 368, the detection signal is synchronized with a frequency of the carrier wave transmitted from an external device such as the reader/writer 200. Therefore, since the carrier detecting circuit 372 is installed, the IC chip 366 can perform a process with an external device such as the reader/writer 200 in synchronization with an external device.

The detecting circuit 374 rectifies the reception voltage output from the antenna 368. Here, the detecting circuit 374 includes, for example, a diode D1 and a capacitor C2.

The regulator 376 smooths the reception voltage to be a constant voltage, and outputs a drive voltage to the MPU 380. Here, the regulator 376 uses a DC component of the reception voltage as the driving voltage.

The demodulating circuit 378 demodulates the carrier wave signal on the basis of the reception voltage and outputs data (for example, a binary data signal of a high level and a low level) corresponding to the carrier wave signal included in the carrier wave. Here, the demodulating circuit 378 outputs an AC component of the reception voltage as data.

The MPU 380 is driven using the drive voltage output from the regulator 376 as electric power and processes the data demodulated in the demodulating circuit 378. Here, the MPU 380 includes one or more processors constituted by a calculating circuit such as, for example, an MPU, various kinds of processing circuits, or the like.

Further, the MPU 380 generates a control signal for controlling the load modulation related to a response to an external device such as the reader/writer 200 in accordance with a processing result. Then, the MPU 380 outputs the control signal to the load modulation circuit 382.

The load modulation circuit 382 includes, for example, a load Z and a switch SW1, and selectively connects (activates) the load Z in accordance with the control signal transferred from the MPU 380 and performs the load modulation. Here, the load Z includes, for example, a resistor having a predetermined resistance value. Further, the switch SW1 is constituted by, for example, a p-channel metal oxide semiconductor field effect transistor (MOSFET) or an n-channel MOSFET.

With the above configuration, the IC chip 366 processes the carrier wave signal received by the antenna 368 and causes the antenna 368 to transmit the response signal through the load modulation.

The IC chip 366 and the antenna 368 have, for example, the configuration illustrated in FIG. 8, and perform NFC communication with an external device such as the reader/writer 200 or the like using carrier waves of a predetermined frequency. Further, it will be appreciated that the configuration of the IC chip 366 and the antenna 368 according to the present embodiment is not limited to the example illustrated in FIG. 8.

The information processing terminal 300 communicates with an external device such as the reader/writer 200, for example, with the configuration illustrated in FIG. 7. Further, the information processing terminal 300 performs the process according to the information processing method according to the present embodiment in the information processing terminal 300 to be described later, for example, with the configuration illustrated in FIG. 7. Further, the hardware configuration of the information processing terminal 300 according to the present embodiment is not limited to the configuration illustrated in FIG. 7.

For example, in a case in which communication with an external device is performed via an external communication device having a function and configuration similar to those of the communication interface 364, or in a case in which communication of one communication scheme described above is not performed, the information processing terminal 300 may not include the communication interface 364.

Further, for example, in a case in which communication with an external device is performed via an external communication device having a function and configuration similar to those of the IC chip 366 and the antenna 368, the information processing terminal 300 may not include the IC chip 366 and the antenna 368.

Further, in a case in which communication with an external device is performed in accordance with a communication scheme other than NFC such as wireless communication using IEEE 802.15.1, the information processing terminal 300 may not include the IC chip 366 and the antenna 368. In the case of the above example, the information processing terminal 300 performs communication with an external device through a communication device that supports a communication scheme other than NFC or an external communication device that supports a communication scheme other than NFC.

Further, the information processing terminal 300 may have a configuration in which, for example, one or more that two of the recording medium 356, the manipulation input device 360, and the display device 362 are not included.

Further, for example, the information processing terminal 300 can have a configuration according to an application example of the information processing terminal 300 to be described later. As an example, for example, in a case in which the information processing terminal 300 is an IC card, the information processing terminal 300 may be constituted by the IC chip 366 and the antenna 368. In a case in which the information processing terminal 300 is an IC card, for example, the MPU 380 constituting the IC chip 366 performs the process according to the information processing method according to the present embodiment in the information processing terminal 300 to be described later.

Further, for example, the configuration illustrated in FIG. 7 (or a configuration in accordance with a modified example) may be realized by one or two or more integrated circuits (ICs).

An example of a configuration of the information processing terminal 300 will be described with reference back to FIG. 6. The first communication unit 302 communicates with an external device in accordance with communication of one communication scheme. For example, the communication in the first communication unit 302 is controlled by the control unit 306.

Here, for example, a communication antenna and an RF circuit (wireless communication), an IEEE 802.15.1 port and a transceiving circuit (wireless communication), an IEEE 802.11 port and a transceiving circuit (wireless communication), a LAN terminal and a transceiving circuit (wired communication), or the like can be used as the first communication unit 302.

The second communication unit 304 communicates with an external device in accordance with communication of another communication scheme. For example, the communication in the second communication unit 304 is controlled by the control unit 306.

Here, for example, a communication device that supports NFC such as the IC chip 366 and the antenna 368 illustrated in FIG. 7 can be used as the second communication unit 304. Further, as described above, the second communication unit 304 may be a communication device that supports a communication scheme other than NFC such as, for example, wireless communication using IEEE 802.15.1.

The control unit 306 is constituted by, for example, an MPU or the like and plays a role of controlling the information processing terminal 300 in general. Further, the control unit 306 includes, for example, the processing unit 310 and plays a leading role in performing the process according to the information processing method according to the present embodiment in the information processing terminal 300 to be described later.

The processing unit 310 plays a leading role in processing the process according to the information processing method according to the present embodiment in the information processing terminal 300. An example of the process according to the information processing method according to the present embodiment in the information processing terminal 300 will be described in each of embodiments to be described later.

Further, the configuration of the information processing terminal (second information processing device) according to the present embodiment is not limited to the configuration illustrated in FIG. 6.

For example, the information processing terminal according to the present embodiment may include the processing unit 310 illustrated in FIG. 6 separately from the control unit 306 (which is realized by, for example, another processing circuit).

Further, the configuration of the information processing terminal according to the present embodiment is not limited to the configuration illustrated in FIG. 6, and it is possible to employ a configuration corresponding to a way of separating the process according to the information processing method according to the present embodiment in the information processing terminal 300 to be described later.

Further, for example, in a case in which communication with an external device is performed via an external communication device having a function and configuration similar to those of the first communication unit 302 or in a case in which it is a configuration in which communication of one communication scheme described above is not performed, the information processing terminal according to the present embodiment may not include the first communication unit 302.

Further, for example, in a case in which communication with an external device is performed via an external communication device having a function and configuration similar to those of the second communication unit 304, the information processing terminal according to the present embodiment may not include the second communication unit 304.

### [1-4] Application examples of devices constituting information processing system according to the present embodiment

Although the information processing device 100 (first information processing device) has been described above as an example of a structural element of the information processing system according to the present embodiment, the present embodiment is not limited to such a configuration. The present embodiment can be applied to various devices capable of performing the process according to the information processing method according to the present embodiment in the information processing device 100 to be described later, such as, for example, "a computer such as a personal computer (PC) or a server", "a tablet type device", "a communication device such as a smartphone", and "a game machine". In addition, the present embodiment can also be applied to a processing IC which can be incorporated into, for example, the devices mentioned above.

In addition, the information processing device 100 according to the present embodiment may be applied to a processing system assuming connection to a network (or communication between devices), such as, for example, cloud computing. As an example of the processing system, for example, "a system in which some processes of the processes according to the information processing method according to the present embodiment in the information processing device 100 to be described later are performed by one device constituting the processing system and processes other than some processes of the processes according to the information processing method according to the present embodiment are performed by another device constituting the processing system" or the like is used.

Further, although the reader/writer 200 (relay device) has been described as a component of the information processing system according to the present embodiment, the present embodiment is not limited to such a form. For example, the present embodiment can be applied to an arbitrary device having a function of relaying communication between devices such as a "reader/writer," a "device with a reader/writer function," and a "communication device that performs communication in accordance with wireless communication using IEEE 802.15.1 such as BLE," or the like. Further, the present embodiment can also be applied to a processing IC which can be incorporated into, for example, the devices mentioned above.

In addition, although the information processing terminal 300 (second information processing device) has been described as a structural element of the information processing system according to the present embodiment, the present embodiment is not limited to such a configuration. The present embodiment can be applied to various devices such as, for example, "a communication device such as a smartphone", "an IC card", and "a game machine".

### [2] Information processing method according to the present embodiment

Next, processes according to the information processing method according to the present embodiment will be described using the above-described information processing system 1000 as an example.

Hereinafter, the process according to the information processing method according to the present embodiment will be described using NFC communication as an example. Note that, as described above, the information processing method according to the present embodiment can be applied to a system in which communication of various communication schemes, such as NFC Type-A communication, NFC Type-B communication, NFC Type-F communication, wireless communication using IEEE 802.15.1 such as BLE, and wireless communication using IEEE 802.11, is used.

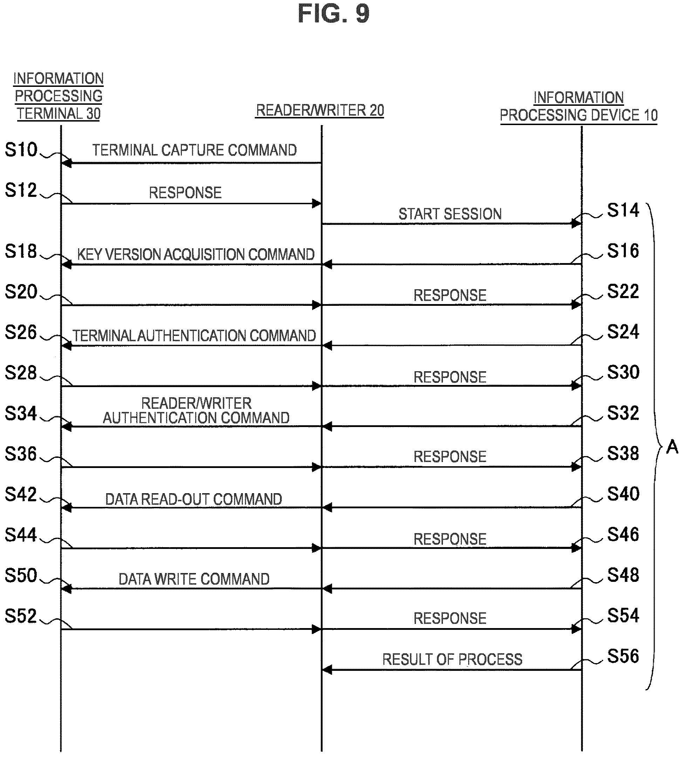

FIG. 9 is an explanatory diagram illustrating an example of the existing communication before the information processing method according to the present embodiment is applied. FIG. 9 illustrates an example of communication using NFC communication in an information processing system having the same configuration as the information processing system 1000 illustrated in FIG. 1. That is, in the example illustrated in FIG. 9, network communication is performed between the information processing device 10 and the reader/writer 20, and NFC communication is performed between the reader/writer 20 and the information processing terminal 30.

The reader/writer 20 transmits a terminal capture command (S10). The information processing terminal 30 having received the terminal capture command transmits response information to the terminal capture command to the reader/writer 20 (S12). The communication shown in step S10 and step S12 is performed, and thus the information processing terminal 30 is captured by the reader/writer 20.

When the information processing terminal 30 is captured, the reader/writer 20 starts a session with the information processing device 10 (S14).

The information processing device 10 transmits a key version acquisition command to the reader/writer 20 (S16). The reader/writer 20 having received the key version acquisition command transmitted from the information processing device 10 in step S16 transmits the received key version acquisition command to the information processing terminal 30 (S18).

The information processing terminal 30 having received the key version acquisition command performs a process on the basis of the key version acquisition command and transmits response information corresponding to a result of the process to the reader/writer 20 (S20). The reader/writer 20 having received the response information transmitted from the information processing terminal 30 in step S20 transmits the received response information to the information processing device 10 (S22).

The information processing device 10 having received the response information transmitted from the reader/writer 20 in step S22 transmits a terminal authentication command to the reader/writer 20 (S24). The reader/writer 20 having received the terminal authentication command transmitted from the information processing device 10 in step S24 transmits the received terminal authentication command to the information processing terminal 30 (S26).

The information processing terminal 30 having received the terminal authentication command performs a process on the basis of the terminal authentication command and transmits response information corresponding to a result of the process to the reader/writer 20 (S28). The reader/writer 20 having received the response information transmitted from the information processing terminal 30 in step S28 transmits the received response information to the information processing device 10 (S30).

The information processing device 10 having received the response information transmitted from the reader/writer 20 in step S30 determines whether or not the information processing terminal 30 has been authenticated normally on the basis of the response information, and transmits a reader/writer authentication command to the reader/writer 20 in a case where it is determined that the information processing terminal 30 has been authenticated normally (S32). The reader/writer 20 having received the reader/writer authentication command transmitted from the information processing device 10 in step S32 transmits the received reader/writer authentication command to the information processing terminal 30 (S34).

The information processing terminal 30 having received the reader/writer authentication command performs a process on the basis of the reader/writer authentication command and transmits response information corresponding to a result of the process to the reader/writer 20 (S36). The reader/writer 20 having received the response information transmitted from the information processing terminal 30 in step S36 transmits the received response information to the information processing device 10 (S38).

The information processing device 10 having received the response information transmitted from the reader/writer 20 in step S38 determines whether or not the reader/writer 20 has been authenticated normally on the basis of the response information, and transmits a data read-out command to the reader/writer 20 in a case where it is determined that the reader/writer 20 has been authenticated normally (S40). The reader/writer 20 having received the data read-out command transmitted from the information processing device 10 in step S40 transmits the received data read-out command to the information processing terminal 30 (S42).

The information processing terminal 30 having received the data read-out command performs a process on the basis of the data read-out command and transmits response information corresponding to a result of the process to the reader/writer 20 (S44). The reader/writer 20 having received the response information transmitted from the information processing terminal 30 in step S44 transmits the received response information to the information processing device 10 (S46).

The information processing device 10 having received the response information transmitted from the reader/writer 20 in step S46 performs a process on the basis of the response information and transmits the data write command to the reader/writer 20 in a case where the process has been performed normally (S48). The reader/writer 20 having received the data write command transmitted from the information processing device 10 in step S48 transmits the received data write command to the information processing terminal 30 (S50).

The information processing terminal 30 having received the data write command performs a process on the basis of the data write command and transmits response information corresponding to a result of the process to the reader/writer 20 (S52). The reader/writer 20 having received the response information transmitted from the information processing terminal 30 in step S52 transmits the received response information to the information processing device 10 (S54).

The information processing device 10 having received the response information transmitted from the reader/writer 20 in step S54 performs a process on the basis of the response information and transmits a result of the process to the reader/writer 20 (S56).

In a case where communication using the existing NFC communication is used, communication, for example, as illustrated in FIG. 9 is performed in the information processing device 10, the reader/writer 20, and the information processing terminal 30.

As illustrated in A of FIG. 9, six reciprocating communications are performed between the information processing device 10 and the reader/writer 20 in communication using NFC communication illustrated in FIG. 9.

Here, for example, in a case where communication between the information processing device 10 and the reader/writer 20 is network communication, a communication time between the information processing device 10 and the reader/writer 20 increases as a distance between the information processing device 10 and the reader/writer 20 increases.

In addition, since communication between the reader/writer 20 and the information processing terminal 30 is NFC, a communication time between the reader/writer 20 and the information processing terminal 30 is sufficiently shorter than a communication time between the information processing device 10 and the reader/writer 20.

For this reason, it is effective to reduce the number of communications between the information processing device 10 and the reader/writer 20 in order to shorten a communication time in communication using the existing NFC communication as illustrated in FIG. 9.

Hereinafter, the process according to the information processing method according to the present embodiment which is applied to the information processing system 1000 and by which the number of communications between devices can be reduced will be described. Hereinafter, as the process according to the information processing method according to the present embodiment, processes according to four embodiments, that is, processes according to the information processing method according to the first embodiment to an information processing method according to a fourth embodiment, will be described.

Note that the process according to the information processing method according to the present embodiment is not limited to the processes according to four embodiments, that is, the processes according to the information processing method according to the first embodiment to the information processing method according to the fourth embodiment which are described below. For example, the process according to the information processing method according to the present embodiment may be a process obtained by arbitrarily combining two or more of the processes according to the information processing method according to the first embodiment to the information processing method according to the fourth embodiment which are described below.

### [2-1] Information processing method according to first embodiment

### [2-1-1] Process in information processing device 100 (first information processing device)

The information processing device 100 transmits a command or information for generating a command and assumed response information indicating a response assumed to be transmitted from the information processing terminal 300 (an example of an external device) in accordance with the command to the reader/writer 200 (relay device). In a case where the information for generating a command is transmitted to the reader/writer 200, the reader/writer 200 generates a command on the basis of information for generating the command as will be described later.

Here, as an example of the assumed response information according to the present embodiment, for example, binary data of an assumed response or data indicating a hash value of the binary data is used.

More specifically, the information processing device 100 determines whether or not there is assumed response information corresponding to a command to be transmitted. Further, in a case where it is determined that there is assumed response information, the information processing device 100 transmits the assumed response information to the reader/writer 200. In addition, as will be described later, the reader/writer 200 determines whether or not a process corresponding to a command has been performed normally in the information processing terminal 300 (second information processing device) using the assumed response information.

The information processing device 100 determines whether or not there is assumed response information corresponding to a command to be transmitted, for example, with reference to a table in which commands and assumed response information are associated with each other (or a database, and the same applies hereinafter). The table in which commands and assumed response information are associated with each other is stored in a recording medium such as, for example, a storage unit (not illustrated) included in the information processing device 100, and the information processing device 100 reads out the table in which the commands and assumed response information are associated with each other from the recording medium.

Note that a method of determining whether or not there is assumed response information corresponding to a command to be transmitted is not limited to a method of referring to the table in which the commands and assumed response information are associated with each other. For example, the information processing device 100 may determine whether or not there is assumed response information corresponding to a command to be transmitted by arithmetically operating any algorithm by which it can be determined that there is assumed response information.

The information processing device 100 transmits the assumed response information to the reader/writer 200, and "communication related to transceiving of response information transmitted from the information processing terminal 300 in accordance with a command transmitted by the information processing device 100" is reduced between the information processing device 100 and the reader/writer 200.

Therefore, it is possible to reduce the number of communications between devices through the process according to the information processing method according to the first embodiment in the information processing device 100.

Further, in a case where the information processing device 100 transmits data indicating a hash value of binary data of an assumed response to the reader/writer 200 as assumed response information, the binary data itself of the assumed response is not transmitted to the reader/writer 200. For this reason, the information processing device 100 transmits data indicating the hash value to the reader/writer 200 as assumed response information, and thus the information processing device 100 can detect an error even when there is an error in determination using the assumed response information in the reader/writer 200.

### [2-1-2] Process in reader/writer 200 (relay device)

In a case where a command transmitted from the information processing device 100 (first information processing device) or information for generating a command is received, the reader/writer 200 transmits the command to the information processing terminal 300 (second information processing device). In a case where a command is received, the reader/writer 200 transmits the received command to the information processing terminal 300. Further, in a case where information for generating a command is received, the reader/writer 200 generates a command on the basis of the received information for generating a command and transmits the generated command to the information processing terminal 300.

Further, in a case where assumed response information transmitted from the information processing device 100 (first information processing device) is further received, the reader/writer 200 determines whether or not a process corresponding to the command has been performed normally in the information processing terminal 300 on the basis of assumed response information and response information, indicating a response corresponding to the command, which is transmitted from the information processing terminal 300 (second information processing device).

For example, in a case where the assumed response information is binary data of an assumed response, the reader/writer 200 determines whether or not a process corresponding to the command has been performed normally in the information processing terminal 300 (second information processing device) by comparing binaries of the assumed response information and the response information with each other. In a case where the assumed response information and the response information are consistent with each other, the reader/writer 200 determines whether or not a process corresponding to the command has been performed normally in the information processing terminal 300. Further, in a case where the assumed response information and the response information are not consistent with each other, the reader/writer 200 determines that a process corresponding to the command has not been performed normally in the information processing terminal 300.

In addition, for example, in a case where the assumed response information is data indicating a hash value of binary data of an assumed response, the reader/writer 200 determines whether or not a process corresponding to the command has been performed normally in the information processing terminal 300 (second information processing device) by comparing the hash value indicated by the assumed response information and the hash value indicated by the response information with each other.

For example, the reader/writer 200 calculates a hash value from the response information. Further, in a case where the hash value indicated by the assumed response information and the calculated hash value of the response information are consistent with each other, the reader/writer 200 determines that a process corresponding to the command has been performed normally in the information processing terminal 300. Further, in a case where the hash value indicated by the assumed response information and the calculated hash value of the response information are not consistent with each other, the reader/writer 200 does not determine that a process corresponding to the command has been performed normally in the information processing terminal 300.

### [2-1-3] Example of process according to information processing method according to first embodiment

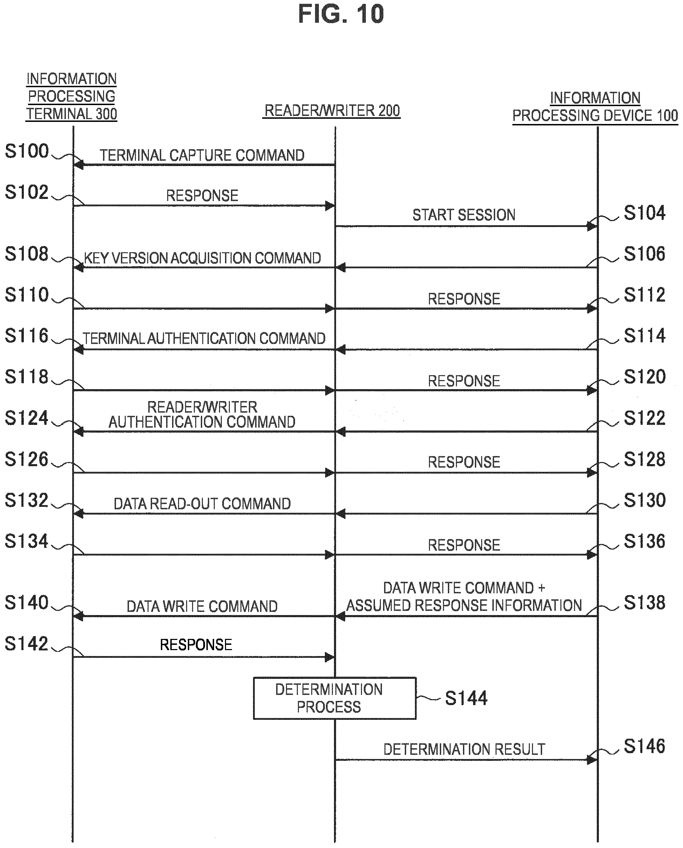

FIG. 10 is an explanatory diagram illustrating an example of the process according to the information processing method according to the first embodiment. FIG. 10 illustrates an example of communication using NFC communication in the information processing system 1000 illustrated in FIG. 1.

Processes of steps S100 to S136 illustrated in FIG. 10 are the same as those of steps S10 to S46 illustrated in FIG. 9. Accordingly, hereinafter, processes different from the processes illustrated in FIG. 9 among processes illustrated in FIG. 10 will be described.

The information processing device 100 having received response information transmitted from the reader/writer 200 in step S136 performs a process on the basis of the response information and transmits a data write command and assumed response information corresponding to the data write command to the reader/writer 200 in a case where the process has been performed normally (S138). The information processing device 100 acquires the assumed response information corresponding to the data write command with reference to, for example, the table in which commands and assumed response information are associated with each other.

Note that, although an example in which the information processing device 100 transmits a data write command and assumed response information through one communication is illustrated in FIG. 10, the information processing device 100 may transmit the data write command and the assumed response information separately through a plurality of times of communication.

The reader/writer 200 having received the data write command transmitted from the information processing device 100 in step S138 transmits the received data write command to the information processing terminal 300 (S140).

The information processing terminal 300 having received the data write command performs a process on the basis of the data write command and transmits response information corresponding to a result of the process to the reader/writer 200 (S142).

The reader/writer 200 having received the response information transmitted from the information processing terminal 300 in step S142 determines whether or not a process corresponding to the data write command has been normally performed in the information processing terminal 300, on the basis of the assumed response information transmitted from the information processing device 100 in step S138 and the received response information (S144). In addition, the reader/writer 200 transmits a determination result in step S144 to the information processing device 100 (S146). In addition, the reader/writer 200 may further transmit the response information transmitted from the information processing terminal 300 in step S142 to the information processing device 100 in step S146.

In the information processing system 1000 to which the first information processing method is applied, for example, the communication illustrated in FIG. 10 is performed.

In the communication illustrated in FIG. 10 to which the first information processing method is applied, five reciprocating communications are performed between the information processing device 100 and the reader/writer 200. That is, the first information processing method is applied, and thus a reduction in the number of communications between the information processing device 100 and the reader/writer 200 is realized in the information processing system 1000, rather than communication using the NFC communication illustrated in FIG. 9.

Note that it is needless to say that communication in the information processing system 1000 to which the first information processing method is applied is not necessarily limited to the example illustrated in FIG. 10.

### [2-2] Information processing method according to second embodiment

### [2-2-1] Process in information processing device 100 (first information processing device)

In a case where response information transmitted from the information processing terminal 300 (an example of an external device) in accordance with a first command to be transmitted is not used to generate a second command to be transmitted after the first command, the information processing device 100 transmits both the first command and the second command to the reader/writer 200 (relay device).

The information processing device 100 specifies another command (second command) to be transmitted together with one command (first command) with reference to, for example, data in which a command group capable of being transmitted together with the first command when the information processing device 100 transmits the first command is recorded. The data in which the command group is recorded is recorded in a recording medium such as, for example, a storage unit (not illustrated) included in the information processing device 100, and the information processing device 100 reads out the data in which the command group is recorded from the recording medium.

Note that, a method of specifying a command group capable of being transmitted together is not limited to a method of referring to data in which the command group is recorded. For example, the information processing device 100 may specify a command group capable of being transmitted together by arithmetically operating any algorithm by which a command group capable of being transmitted together can be specified.

In addition, the process according to the information processing method according to the second embodiment in the information processing device 100 is not limited to the above-described example.

For example, a command including only non-encrypted parameters can be generated by the reader/writer 200. Accordingly, the information processing device 100 may not transmit the command including only non-encrypted parameters to the reader/writer 200.

Here, in a case where a key version acquisition command is not transmitted, there is a possibility that parameters of a terminal authentication command to be transmitted after the key version acquisition command may vary depending on a key version included in response information according to the key version acquisition command.

Here, in a case where the key version acquisition command is not transmitted, the information processing device 100 transmits a plurality of terminal authentication commands corresponding to all key versions assumed in the information processing system 1000 to the reader/writer 200. As all of the key versions assumed in the information processing system 1000, for example, all key versions corresponding to the information processing device 100 and the reader/writer 200 are used.

Further, in a case where the information processing device 100 transmits a plurality of terminal authentication commands, the reader/writer 200 transmits a terminal authentication command corresponding to the key version included in the response information according to the key version acquisition command, among the received plurality of terminal authentication commands, to the information processing terminal 300.

The information processing device 100 transmits both the first command and the second command to the reader/writer 200, and thus "communication related to transceiving of a command and response information corresponding to the command" is reduced between the information processing device 100 and the reader/writer 200.

In addition, the information processing device 100 does not transmit the command including only non-encrypted parameters to the reader/writer 200, and thus "communication related to transceiving of the command including only non-encrypted parameters and the response information corresponding to the command" is reduced between the information processing device 100 and the reader/writer 200.

Therefore, it is possible to reduce the number of communications between devices through the process according to the information processing method according to the second embodiment in the information processing device 100.

### [2-2-2] Example of process according to information processing method according to second embodiment

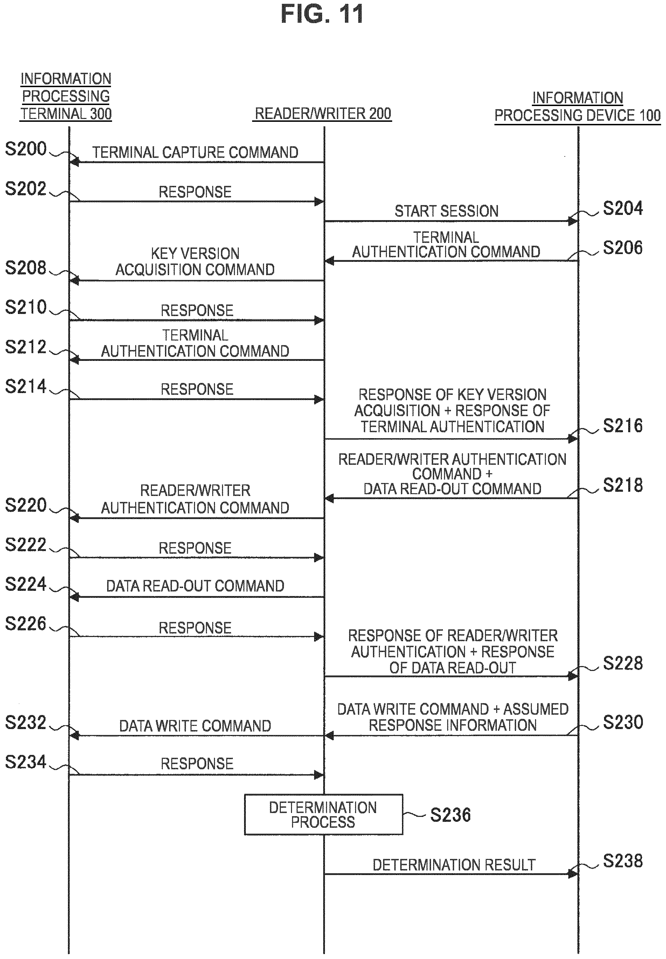

FIG. 11 is an explanatory diagram illustrating an example of the process according to the information processing method according to the second embodiment. FIG. 11 illustrates an example of communication using NFC communication in the information processing system 1000 illustrated in FIG. 1. FIG. 11 illustrates an example of a process in a case where the process according to the information processing method according to the second embodiment is performed, in addition to the process according to the information processing method according to the first embodiment illustrated in FIG. 10.

Processes of steps S200 to S204 illustrated in FIG. 11 are the same as those of steps S10 to S14 illustrated in FIG. 9. Accordingly, hereinafter, processes different from the processes illustrated in FIG. 9 among processes illustrated in FIG. 11 will be described.

The information processing device 100 transmits a terminal authentication command to the reader/writer 20 (S206). Here, the information processing device 100 transmits a plurality of terminal authentication commands corresponding to all key versions assumed in the information processing system 1000 to the reader/writer 200.

The reader/writer 200 having received the terminal authentication command transmitted from the information processing device 100 in step S206 generates a key version acquisition command and transmits the generated key version acquisition command to the information processing terminal 300 (S208).

The information processing terminal 300 having received the key version acquisition command performs a process on the basis of the key version acquisition command and transmits response information corresponding to a result of the process to the reader/writer 200 (S210).

The reader/writer 200 having received the response information transmitted from the information processing terminal 300 in step S210 transmits a terminal authentication command corresponding to a key version included in the response information, among the plurality of terminal authentication commands transmitted from the information processing device 100 in step S206, to the information processing terminal 300 (S214).

The information processing terminal 300 having received the terminal authentication command performs a process on the basis of the terminal authentication command and transmits response information corresponding to a result of the process to the reader/writer 200 (S214).

The reader/writer 200 having received the response information transmitted from the information processing terminal 300 in step S214 transmits the response information transmitted from the information processing terminal 300 in step S210 and the response information transmitted from the information processing terminal 300 in step S214 to the information processing device 100 (S216).

The information processing device 100 having received the pieces of response information transmitted from the reader/writer 200 in step S216 performs a process on the basis of each of the received pieces of response information. For example, the information processing device 100 determines whether or not the information processing terminal 300 has been authenticated normally on the basis of the received response information. Further, in a case where it is determined that the information processing terminal 300 has been authenticated normally, the information processing device 100 transmits both a reader/writer authentication command and a data read-out command to the reader/writer 200 (S218). The information processing device 100 specifies a data read-out command capable of being transmitted together with the reader/writer authentication command with reference to, for example, data in which the command group is recorded.

The reader/writer 200 having received the reader/writer authentication command transmitted from the information processing device 100 in step S218 transmits the received reader/writer authentication command to the information processing terminal 300 (S220).

The information processing terminal 300 having received the reader/writer authentication command performs a process on the basis of the reader/writer authentication command and transmits response information corresponding to a result of the process to the reader/writer 200 (S222).

The reader/writer 200 having received the response information transmitted from the information processing terminal 300 in step S222 transmits the data read-out command transmitted from the information processing device 100 in step S218 to the information processing terminal 300 (S224).

The information processing terminal 300 having received the data read-out command performs a process on the basis of the data read-out command and transmits response information corresponding to a result of the process to the reader/writer 200 (S226).

The reader/writer 200 having received the response information transmitted from the information processing terminal 300 in step S226 transmits the response information transmitted from the information processing terminal 300 in step S222 and the response information transmitted from the information processing terminal 300 in step S226 to the information processing device 100 (S228).

The information processing device 100 having received the pieces of response information transmitted from the reader/writer 200 in step S228 performs a process on the basis of each of the received pieces of response information. For example, the information processing device 100 determines whether or not the reader/writer 200 has been authenticated normally on the basis of the received response information. Further, in a case where it is determined that the reader/writer 200 has been authenticated normally, the information processing device 100 transmits a data write command and assumed response information corresponding to the data write command to the reader/writer 200, similar to step S138 of FIG. 10 (S230).

Note that, although an example in which the information processing device 100 transmits a data write command and assumed response information through one communication is illustrated in FIG. 11, the information processing device 100 may transmit the data write command and the assumed response information separately through a plurality of times of communication as described above.

The reader/writer 200 having received the data write command transmitted from the information processing device 100 in step S230 transmits the received data write command to the information processing terminal 300 (S232).

The information processing terminal 300 having received the data write command performs a process on the basis of the data write command and transmits response information corresponding to a result of the process to the reader/writer 200 (S234).

The reader/writer 200 having received the response information transmitted from the information processing terminal 300 in step S234 determines whether or not a process corresponding to the data write command has been normally performed in the information processing terminal 300, similar to step S144 of FIG. 10 (S236). In addition, the reader/writer 200 transmits a determination result in step S236 to the information processing device 100 (S238). In addition, the reader/writer 200 may further transmit the response information transmitted from the information processing terminal 300 in step S234 to the information processing device 100 in step S238.

In the information processing system 1000 to which the second information processing method is applied, for example, the communication illustrated in FIG. 11 is performed.

In the communication illustrated in FIG. 11 to which the first information processing method and the second information processing method are applied, three reciprocating communications are performed between the information processing device 100 and the reader/writer 200. That is, the first information processing method and the second information processing method are applied, and thus a reduction in the number of communications between the information processing device 100 and the reader/writer 200 is realized in the information processing system 1000, rather than communication using the NFC communication illustrated in FIG. 9.

Further, in communication illustrated in FIG. 11 to which the first information processing method and the second information processing method are applied, a reduction in the number of communications between the information processing device 100 and the reader/writer 200 is realized, rather than communication illustrated in FIG. 10 to which the first information processing method is applied. That is, the second information processing method is applied, and thus it is possible to reduce the number of communications between the information processing device 100 and the reader/writer 200.

Note that it is needless to say that communication in the information processing system 1000 to which the second information processing method is applied is not limited to the example illustrated in FIG. 11.

### [2-3] Information processing method according to third embodiment

### [2-3-1] Process in information processing device 100 (first information processing device)

A command including parameters to be used for authentication needs to be changed every time the command is transmitted on the information processing device 100 side, for example, in order to prevent a replay attack. However, when a command used for authentication can be generated by the reader/writer 200 while preventing a replay attack, a reduction in the number of communications between the information processing device 100 and the reader/writer 200 can be expected.

Consequently, the information processing device 100 transmits parameters, used for authentication of the information processing terminal 300 (an example of an external device), for which the terms of validity are set to the reader/writer 200 (relay device) on a regular or non-regular basis. Hereinafter, parameters used for authentication may be simply referred to as "parameters".

Here, there is a possibility that the parameters used for authentication may vary depending on response information to a command before the authentication. In a case where the parameters used for authentication vary depending on response information as described above, the information processing device 100 generates each of the parameters used for authentication to be transmitted assuming fixed response information. Further, in a case where inconsistency occurs due to the fixed response information, for example, in various authentication or various encryption processes to be performed later, the information processing device 100 acquires the response information to a command before the authentication and then makes consistency using the acquired response information to eliminate inconsistency.

The term of validity which is set for the parameter used for authentication is notified to the reader/writer 200, for example, by transmitting data indicating the term of validity by the information processing device 100. The data indicating the term of validity may be metadata added to the data indicating the parameter used for authentication or may be data different from the data indicating the parameter used for authentication. Note that the information processing device 100 may not transmit the data indicating the term of validity to the reader/writer 200 (relay device).

In a case where data is received from the reader/writer 200 (relay device), the information processing device 100 determines whether or not the received data includes the parameter used for the authentication satisfying the term of validity. That is, the information processing device 100 checks the term of validity of the parameter used for authentication which is included in the received data.

Further, in a case where it is determined that the received data includes the parameter used for authentication satisfying the term of validity, the information processing device 100 determines that the authentication of the information processing terminal 300 (an example of an external device) has been successful. Further, in a case where it is determined that the authentication has been successful, the information processing device 100 transmits a predetermined command to the reader/writer 200.

Here, the term of validity which is set for the parameter used for authentication is set to be larger than, for example, an interval of transmission at which the information processing device 100 transmits the parameter used for authentication. The term of validity which is set for the parameter used for authentication is set to be larger than the interval of transmission, and thus it is possible to prevent erroneous determination in determination related to the term of validity (for example, erroneous determination caused by a difference between a parameter used by the reader/writer 200 and a parameter for which the information processing device 100 performs determination related to the term of validity).

### [2-3-2] Process in reader/writer 200 (relay device)

The reader/writer 200 transmits a command for authenticating the information processing terminal 300 (second information processing device) on the basis of parameters transmitted from the information processing device 100 (first information processing device) on a regular or non-regular basis to the information processing terminal 300.

More specifically, in a case where the information processing terminal 300 is captured, the reader/writer 200 transmits a command for performing authentication based on the latest parameter, among the parameters received from the information processing device 100, to the information processing terminal 300. As the latest parameter according to the present embodiment, for example, a parameter received most recently by the reader/writer 200 or a parameter of which the term of validity is the farthest from a point in time of processing is used.

In addition, the reader/writer 200 transmits response information to be transmitted from the information processing terminal 300 in accordance with a command for performing authentication to the information processing device 100.

### [2-3-3] example of process according to information processing method according to third embodiment

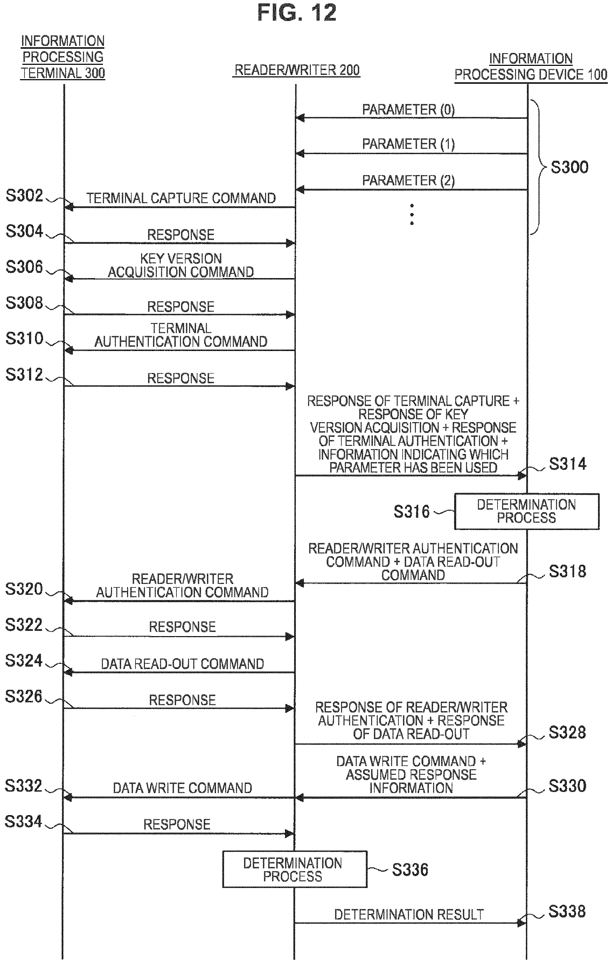

FIG. 12 is an explanatory diagram illustrating an example of the process according to the information processing method according to the third embodiment. FIG. 12 illustrates an example of communication using NFC communication in the information processing system 1000 illustrated in FIG. 1. FIG. 12 illustrates an example of a process in a case where the process according to the information processing method according to the third embodiment is performed, in addition to the process according to the information processing method according to the first embodiment illustrated in FIG. 11 and the process according to the information processing method according to the second embodiment.

The information processing device 100 transmits parameters for which the terms of validity are set, for example, at the set intervals of transmission (S300).

The reader/writer 200 transmits a terminal capture command (S302). The information processing terminal 300 having received the terminal capture command transmits response information to the terminal capture command to the reader/writer 200 (S304).

Here, data included in the response information transmitted by the information processing terminal 300 in step S304 is used as non-encrypted parameters of the subsequent commands in NFC communication. Accordingly, in the information processing system 1000, the reader/writer 200 can add the data included in the response information transmitted by the information processing terminal 300 in step S304 to a command.

The reader/writer 200 generates a key version acquisition command and transmits the generated key version acquisition command to the information processing terminal 300 (S306).

The information processing terminal 300 having received the key version acquisition command performs a process on the basis of the key version acquisition command and transmits response information corresponding to a result of the process to the reader/writer 200 (S308).

The reader/writer 200 having received the response information transmitted from the information processing terminal 300 in step S308 generates a terminal authentication command on the basis of the latest parameter transmitted from the information processing device 100 in step S300, and transmits the generated terminal authentication command to the information processing terminal 300 (S310).

The information processing terminal 300 having received the terminal authentication command performs a process on the basis of the terminal authentication command and transmits response information corresponding to a result of the process to the reader/writer 200 (S312).

The reader/writer 200 having received the response information transmitted from the information processing terminal 300 in step S312 transmits the response information transmitted from the information processing terminal 300 in step S304, the response information transmitted from the information processing terminal 300 in step S308, and the response information transmitted from the information processing terminal 300 in step S312 to the information processing device 100 (S314).

The information processing device 100 having received the pieces of response information transmitted from the reader/writer 200 in step S314 performs a process on the basis of each of the received pieces of response information.

For example, the information processing device 100 determines whether or not a parameter satisfying the term of validity is included in the received response information (S316).

Further, in a case where it is determined that a parameter satisfying the term of validity is included in the received response information, the information processing device 100 determines whether or not the information processing terminal 300 has been authenticated normally, on the basis of the received response information.

Further, in a case where it is determined that the information processing terminal 300 has been authenticated normally, the information processing device 100 transmits both a reader/writer authentication command and a data read-out command to the reader/writer 200, similar to step S218 of FIG. 11 (S318).

The reader/writer 200 having received the reader/writer authentication command transmitted from the information processing device 100 in step S318 transmits the received reader/writer authentication command to the information processing terminal 300, similar to step S220 of FIG. 11 (S320).

The information processing terminal 300 having received the reader/writer authentication command performs a process on the basis of the reader/writer authentication command and transmits response information corresponding to a result of the process to the reader/writer 200 (S322).

The reader/writer 200 having received the response information transmitted from the information processing terminal 300 in step S322 transmits the data read-out command transmitted from the information processing device 100 in step S318 to the information processing terminal 300 (S324), similar to step S224 of FIG. 11.

The information processing terminal 300 having received the data read-out command performs a process on the basis of the data read-out command and transmits response information corresponding to a result of the process to the reader/writer 200 (S326).

The reader/writer 200 having received the response information transmitted from the information processing terminal 300 in step S326 transmits the response information transmitted from the information processing terminal 300 in step S322 and the response information transmitted from the information processing terminal 300 in step S326 to the information processing device 100 (S328).

The information processing device 100 having received the pieces of response information transmitted from the reader/writer 200 in step S328 performs a process on the basis of each of the received pieces of response information. For example, the information processing device 100 determines whether or not the reader/writer 200 has been authenticated normally on the basis of the received response information. Further, in a case where it is determined that the reader/writer 200 has been authenticated normally, the information processing device 100 transmits a data write command and assumed response information corresponding to the data write command to the reader/writer 200, similar to step S138 of FIG. 10 (S330).

Note that, although an example in which the information processing device 100 transmits a data write command and assumed response information through one communication is illustrated in FIG. 12, the information processing device 100 may transmit the data write command and the assumed response information separately through a plurality of times of communication as described above.

The reader/writer 200 having received the data write command transmitted from the information processing device 100 in step S330 transmits the received data write command to the information processing terminal 300 (S332).

The information processing terminal 300 having received the data write command performs a process on the basis of the data write command and transmits response information corresponding to a result of the process to the reader/writer 200 (S334).

The reader/writer 200 having received the response information transmitted from the information processing terminal 300 in step S334 determines whether or not a process corresponding to the data write command has been normally performed in the information processing terminal 300, similar to step S144 of FIG. 10 (S336). In addition, the reader/writer 200 transmits a determination result in step S336 to the information processing device 100 (S338). In addition, the reader/writer 200 may further transmit the response information transmitted from the information processing terminal 300 in step S334 to the information processing device 100 in step S338.

In the information processing system 1000 to which the third information processing method is applied, for example, the communication illustrated in FIG. 12 is performed.

In the communication illustrated in FIG. 12 to which the first information processing method, the second information processing method, and the third information processing method are applied, two reciprocating communications are performed between the information processing device 100 and the reader/writer 200. That is, the first information processing method, the second information processing method, and the third information processing method are applied, and thus a reduction in the number of communications between the information processing device 100 and the reader/writer 200 is realized in the information processing system 1000, rather than communication using the NFC communication illustrated in FIG. 9.

Further, in communication illustrated in FIG. 12 to which the first information processing method, the second information processing method, and the third information processing method are applied, a reduction in the number of communications between the information processing device 100 and the reader/writer 200 is realized, rather than communication illustrated in FIG. 11 to which the first information processing method and the second information processing method are applied. That is, the third information processing method is applied, and thus it is possible to reduce the number of communications between the information processing device 100 and the reader/writer 200.

Note that it is needless to say that communication in the information processing system 1000 to which the third information processing method is applied is not limited to the example illustrated in FIG. 12.

### [2-4] Information processing method according to fourth embodiment

### [2-4-1] Process in information processing device 100 (first information processing device)

The information processing device 100 transmits another command for causing the information processing terminal 300 (an example of an external device) to perform another process to the reader/writer 200 together with a command for performing authentication. Here, examples of the command for performing authentication and another command which are transmitted together include "a terminal authentication command and a data read-out command", "a reader/writer authentication command and a data read-out command", "a reader/writer authentication command and a data write command", and the like.

The information processing device 100 transmits the command for performing authentication and another command to the reader/writer 200, and thus "communication related to transceiving of a command and response information corresponding to the command" is reduced between the information processing device 100 and the reader/writer 200.

Therefore, it is possible to reduce the number of communications between devices through the process according to the information processing method according to the fourth embodiment in the information processing device 100.

Note that, as described above, in a case where the information processing method according to the second embodiment is used, both a first command and a second command are transmitted to the reader/writer 200. That is, the information processing method according to the fourth embodiment can be regarded as an example of the above-described information processing method according to the second embodiment.

### [2-4-2] example of process according to information processing method according to fourth embodiment

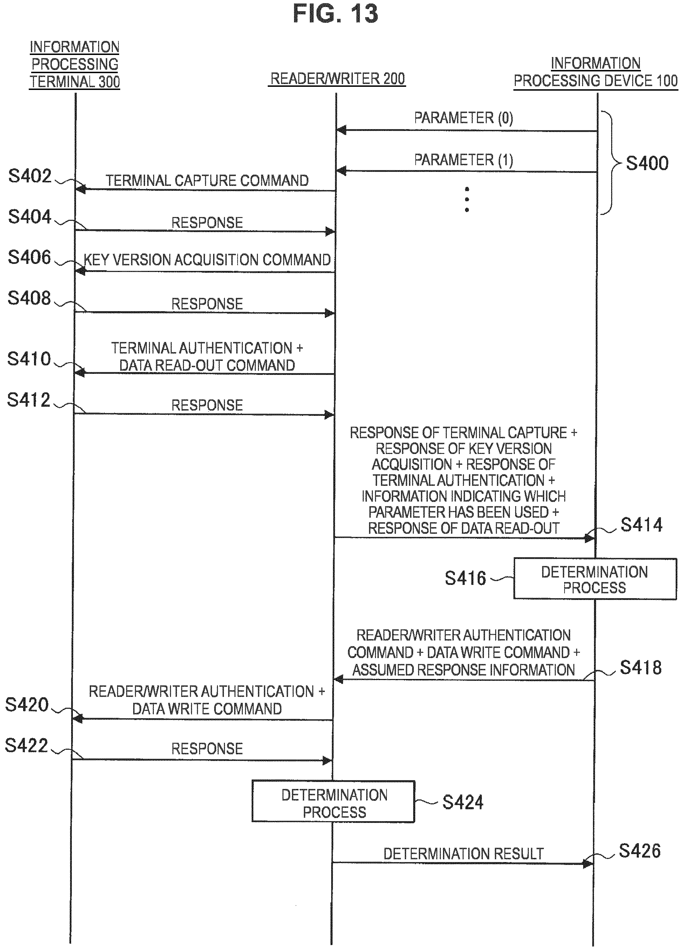

FIG. 13 is an explanatory diagram illustrating an example of the process according to the information processing method according to the fourth embodiment. FIG. 13 illustrates an example of communication using NFC communication in the information processing system 1000 illustrated in FIG. 1. FIG. 13 illustrates an example of a process in a case where the process according to the information processing method according to the fourth embodiment is performed, in addition to the process according to the information processing method according to the first embodiment illustrated in FIG. 12, the process according to the information processing method according to the second embodiment, and the process according to the information processing method according to the third embodiment.

The information processing device 100 transmits parameters for which the terms of validity are set, for example, at the set intervals of transmission (S400), similar to step S300 of FIG. 12.

The reader/writer 200 transmits a terminal capture command (S402). The information processing terminal 300 having received the terminal capture command transmits response information to the terminal capture command to the reader/writer 200 (S404).

The reader/writer 200 generates a key version acquisition command and transmits the generated key version acquisition command to the information processing terminal 300 (S406).

The information processing terminal 300 having received the key version acquisition command performs a process on the basis of the key version acquisition command and transmits response information corresponding to a result of the process to the reader/writer 200 (S408).

The reader/writer 200 having received the response information transmitted from the information processing terminal 300 in step S408 generates a terminal authentication command on the basis of the latest parameter transmitted from the information processing device 100 in step S400. In addition, the reader/writer 200 transmits the generated terminal authentication command and a data read-out command to the information processing terminal 300 (S412).

Here, the reader/writer 200 transmits, for example, a data read-out command for reading out a preset region together with the generated terminal authentication command. In addition, for example, in a case where the information processing device 100 transmits the terminal authentication command and the data read-out command to the reader/writer 200, the reader/writer 200 transmits the received terminal authentication command and data read-out command to the information processing terminal 300.

The information processing terminal 300 having received the terminal authentication command and the data read-out command performs a process on the basis of the terminal authentication command and the data read-out command and transmits response information corresponding to a result of the process to the reader/writer 200 (S412).

The reader/writer 200 having received the response information transmitted from the information processing terminal 300 in step S412 transmits the response information transmitted from the information processing terminal 300 in step S404, the response information transmitted from the information processing terminal 300 in step S408, and the response information transmitted from the information processing terminal 300 in step S412 to the information processing device 100 (S414).

The information processing device 100 having received the pieces of response information transmitted from the reader/writer 200 in step S414 performs a process on the basis of each of the received pieces of response information.

For example, the information processing device 100 determines whether or not a parameter satisfying the term of validity is included in the received response information (S416), similar to step S316 of FIG. 12.

Further, in a case where it is determined that a parameter satisfying the term of validity is included in the received response information, the information processing device 100 determines whether or not the information processing terminal 300 has been authenticated normally, on the basis of the received response information.

Further, in a case where it is determined that the information processing terminal 300 has been authenticated normally, the information processing device 100 transmits a reader/writer authentication command, a data write command, and assumed response information corresponding to a data write command to the reader/writer 200 (S418).

The reader/writer 200 having received the reader/writer authentication command, the data write command, and the assumed response information transmitted from the information processing device 100 in step S418 transmits the received reader/writer authentication command and data write command to the information processing terminal 300 (S420).

The information processing terminal 300 having received the reader/writer authentication command and the data write command performs a process on the basis of each of the reader/writer authentication command and the data write command and transmits response information corresponding to results of the processes to the reader/writer 200 (S422).

The reader/writer 200 having received the response information transmitted from the information processing terminal 300 in step S422 determines whether or not a process corresponding to the data write command has been normally performed in the information processing terminal 300, similar to step S144 of FIG. 10 (S424). In addition, the reader/writer 200 transmits a determination result in step S424 to the information processing device 100 (S426). In addition, the reader/writer 200 may further transmit the response information transmitted from the information processing terminal 300 in step S422 to the information processing device 100 in step S426.

In the information processing system 1000 to which the fourth information processing method is applied, for example, the communication illustrated in FIG. 13 is performed.

In the communication illustrated in FIG. 13 to which the first information processing method, the second information processing method, the third information processing method, and the fourth information processing method are applied, one reciprocating communication is performed between the information processing device 100 and the reader/writer 200. That is, the first information processing method, the second information processing method, the third information processing method, and the fourth information processing method are applied, and thus a reduction in the number of communications between the information processing device 100 and the reader/writer 200 is realized in the information processing system 1000, rather than communication using the NFC communication illustrated in FIG. 9.

Further, in communication illustrated in FIG. 13 to which the first information processing method, the second information processing method, the third information processing method, and the fourth information processing method are applied, a reduction in the number of communications between the information processing device 100 and the reader/writer 200 is realized, rather than communication illustrated in FIG. 12 to which the first information processing method, the second information processing method, and the third information processing method are applied. That is, the fourth information processing method is applied, and thus it is possible to reduce the number of communications between the information processing device 100 and the reader/writer 200.

Note that it is needless to say that communication in the information processing system 1000 to which the fourth information processing method is applied is not limited to the example illustrated in FIG. 13.

### (Program according to the present embodiment)

### [I] Program for causing computer system to function as first information processing device

A program for causing a computer system to function as the first information processing device according to the present embodiment (for example, a program capable of executing a process according to the information processing method according to the present embodiment in the first information processing device, such as one or two or more processes among the process according to the first information processing method to the process according to the fourth information processing method in the information processing device 100 constituting the information processing system 1000) is executed by a processor or the like in the computer system, and thus it is possible to reduce the number of communications between devices. Here, as the computer system according to the present embodiment, a single computer or a plurality of computers are used. A series of processes according to the information processing method according to the present embodiment in the first information processing device is performed by the computer system according to the present embodiment.

Further, as the program causing the computer system to function as the first information processing device according to the present embodiment is executed by the processor or the like in the computer system, the effects obtained by the process according to the information processing method according to of the embodiment in the information processing device 100 (the first information processing device) described above can be obtained.

### [II] Program for causing computer system to function as second information processing device

A program for causing a computer system to function as the relay device according to the present embodiment (for example, a program capable of executing a process according to the information processing method according to the present embodiment in the relay device, such as either or both of the process according to the first information processing method and the process according to the third information processing method in the reader/writer 200 constituting the information processing system 1000) is executed by a processor or the like in the computer system, and thus an information processing system capable of reducing the number of communications between devices is realized.

Further, as the program causing the computer system to function as the relay device according to the present embodiment is executed by the processor or the like in the computer system, the effects obtained by the process according to the information processing method according to of the embodiment in the reader/writer 200 (the relay device) described above can be obtained.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above, the programs (computer programs) for causing the computer system to function as the first information processing device according to the present embodiment or the relay device according to the present embodiment is provided, but the present embodiment can further provide a recording medium having each of the above-described programs recorded thereon or a recording medium having both the above-described programs recorded thereon.

The above-described configuration indicates an example of the present embodiment, and it naturally belongs to the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device that communicates with an external device which is a communication target through a relay device, the information processing device including:
   a processing unit that causes a command or information for generating the command and assumed response information to the relay device, the assumed response information indicating a response assumed to be transmitted from the external device in accordance with the command.
(2) The information processing device according to (1), in which the processing unit
   determines whether or not there is the assumed response information corresponding to a command to be transmitted, and
   transmits the assumed response information in a case where it is determined that there is the assumed response information.
(3) The information processing device according to (1) or (2), in which the assumed response information is binary data of the assumed response or data indicating a hash value of the binary data.
(4) The information processing device according to any one of (1) to (3), in which, in a case where response information to be transmitted from the external device in accordance with a first command to be transmitted is not used to generate a second command to be transmitted after the first command, the processing unit transmits the second command together with the first command.
(5) The information processing device according to any one of (1) to (4), in which the processing unit
   causes a parameter for which a term of validity is set to be transmitted on a regular or non-regular basis, the parameter being used for authentication of the external device,
   determines whether or not the parameter satisfying the term of validity is included in received data in a case where the data is received from the relay device, and
   determines that authentication has been successful in a case where it is determined that the parameter satisfying the term of validity is included in the received data.
(6) The information processing device according to any one of (1) to (6), in which the processing unit causes both a command for performing authentication and another command for causing the external device to perform another process to be transmitted.
(7) An information processing device communicating with an external device which is a communication target through a relay device, the information processing device including:
   a processing unit that causes, in a case where response information transmitted from the external device in accordance with a first command to be transmitted is not used to generate a second command to be transmitted after the first command, both the first command and the second command to be transmitted to the relay device.
(8) The information processing device according to (7), in which the processing unit
   causes a parameter for which a term of validity is set to be transmitted on a regular or non-regular basis, the parameter being used for authentication of the external device,
   determines whether or not the parameter satisfying the term of validity is included in received data in a case where the data is received from the relay device, and
   determines that authentication has been successful in a case where it is determined that the parameter satisfying the term of validity is included in the received data.
(9) The information processing device according to (7) or (8), in which the processing unit causes both a command for performing authentication and another command for causing the external device to perform another process to be transmitted.
(10) An information processing device that communicates with an external device which is a communication target through a relay device, the information processing device including:
   a processing unit that
   causes a parameter for which a term of validity is set to be transmitted on a regular or non-regular basis, the parameter being used for authentication of the external device,
   determines, in a case where data is received from the relay device, whether or not the parameter satisfying the term of validity is included in the received data, and
   determines that authentication has been successful in a case where it is determined that the parameter satisfying the term of validity is included in the received data.
(11) The information processing device according to (10),
   in which, in a case where it is determined that the authentication has been successful, the processing unit causes both a command for performing authentication and another command for causing the external device to perform another process to be transmitted.
(12) A relay device including:
   a processing unit that causes, in a case where a command transmitted from a first information processing device or information for generating the command is received, the command to be transmitted to a second information processing device,
   in which, in a case where assumed response information indicating a response assumed to be transmitted from the second information processing device in accordance with the command transmitted from the first information processing device is further received, the processing unit determines whether or not a process corresponding to the command has been performed normally in the second information processing device on the basis of the assumed response information and the response information indicating the response, corresponding to the command, which is transmitted from the second information processing device.
(13) The relay device according to (12),
   in which the assumed response information is binary data of the assumed response, and
   the processing unit determines whether or not the process corresponding to the command has been performed normally in the second information processing device by comparing binaries of the assumed response information and the response information with each other.
(14) The relay device according to (12),
   in which the assumed response information is data indicating a hash value of binary data of the assumed response, and
   the processing unit determines whether or not the process corresponding to the command has been performed normally in the second information processing device by comparing a hash value indicated by the assumed response information and a hash value indicated by the response information with each other.
(15) A relay device including:
   a processing unit that causes a command for authenticating a second information processing device to be transmitted to the second information processing device on the basis of a parameter used for authentication of the second information processing device which is transmitted from a first information processing device on a regular or non-regular basis,
   in which the processing unit causes a command for performing the authentication based on a latest parameter among the parameters received from the first information processing device to be transmitted to the second information processing device in a case where the second information processing device is captured, and causes response information to be transmitted from the second information processing device in accordance with the command for performing the authentication to be transmitted to the first information processing device.

### Reference Signs List

- 10, 100: information processing device
- 20, 200: reader/writer
- 30, 300: information processing terminal
- 102: communication unit
- 104, 206, 306: control unit
- 110, 210, 310: processing unit
- 202, 302: first communication unit
- 204, 304: second communication unit
- 1000: information processing system

## Claims

1. An information processing device that communicates with an external device which is a communication target through a relay device, the information processing device comprising:
a processing unit that causes a command or information for generating the command and assumed response information to the relay device, the assumed response information indicating a response assumed to be transmitted from the external device in accordance with the command.

2. The information processing device according to claim 1, wherein the processing unit
determines whether or not there is the assumed response information corresponding to a command to be transmitted, and
transmits the assumed response information in a case where it is determined that there is the assumed response information.

3. The information processing device according to claim 1, wherein the assumed response information is binary data of the assumed response or data indicating a hash value of the binary data.

4. The information processing device according to claim 1, wherein, in a case where response information to be transmitted from the external device in accordance with a first command to be transmitted is not used to generate a second command to be transmitted after the first command, the processing unit transmits the second command together with the first command.

5. The information processing device according to claim 1, wherein the processing unit
causes a parameter for which a term of validity is set to be transmitted on a regular or non-regular basis, the parameter being used for authentication of the external device,
determines whether or not the parameter satisfying the term of validity is included in received data in a case where the data is received from the relay device, and
determines that authentication has been successful in a case where it is determined that the parameter satisfying the term of validity is included in the received data.

6. The information processing device according to claim 1, wherein the processing unit causes both a command for performing authentication and another command for causing the external device to perform another process to be transmitted.

7. An information processing device communicating with an external device which is a communication target through a relay device, the information processing device comprising:
a processing unit that causes, in a case where response information transmitted from the external device in accordance with a first command to be transmitted is not used to generate a second command to be transmitted after the first command, both the first command and the second command to be transmitted to the relay device.

8. The information processing device according to claim 7, wherein the processing unit
causes a parameter for which a term of validity is set to be transmitted on a regular or non-regular basis, the parameter being used for authentication of the external device,
determines whether or not the parameter satisfying the term of validity is included in received data in a case where the data is received from the relay device, and
determines that authentication has been successful in a case where it is determined that the parameter satisfying the term of validity is included in the received data.

9. The information processing device according to claim 7, wherein the processing unit causes both a command for performing authentication and another command for causing the external device to perform another process to be transmitted.

10. An information processing device that communicates with an external device which is a communication target through a relay device, the information processing device comprising:
a processing unit that
causes a parameter for which a term of validity is set to be transmitted on a regular or non-regular basis, the parameter being used for authentication of the external device,
determines, in a case where data is received from the relay device, whether or not the parameter satisfying the term of validity is included in the received data, and
determines that authentication has been successful in a case where it is determined that the parameter satisfying the term of validity is included in the received data.

11. The information processing device according to claim 10,
wherein, in a case where it is determined that the authentication has been successful, the processing unit causes both a command for performing authentication and another command for causing the external device to perform another process to be transmitted.

12. A relay device comprising:
a processing unit that causes, in a case where a command transmitted from a first information processing device or information for generating the command is received, the command to be transmitted to a second information processing device,
wherein, in a case where assumed response information indicating a response assumed to be transmitted from the second information processing device in accordance with the command transmitted from the first information processing device is further received, the processing unit determines whether or not a process corresponding to the command has been performed normally in the second information processing device on a basis of the assumed response information and the response information indicating the response, corresponding to the command, which is transmitted from the second information processing device.

13. The relay device according to claim 12,
wherein the assumed response information is binary data of the assumed response, and
the processing unit determines whether or not the process corresponding to the command has been performed normally in the second information processing device by comparing binaries of the assumed response information and the response information with each other.

14. The relay device according to claim 12,
wherein the assumed response information is data indicating a hash value of binary data of the assumed response, and
the processing unit determines whether or not the process corresponding to the command has been performed normally in the second information processing device by comparing a hash value indicated by the assumed response information and a hash value indicated by the response information with each other.

15. A relay device comprising:
a processing unit that causes a command for authenticating a second information processing device to be transmitted to the second information processing device on a basis of a parameter used for authentication of the second information processing device which is transmitted from a first information processing device on a regular or non-regular basis,
wherein the processing unit causes a command for performing the authentication based on a latest parameter among the parameters received from the first information processing device to be transmitted to the second information processing device in a case where the second information processing device is captured, and causes response information to be transmitted from the second information processing device in accordance with the command for performing the authentication to be transmitted to the first information processing device.
